# EUROPEAN PATENT APPLICATION

(11) **EP 1 666 772 A1**
(43) Date of publication of application: **07.06.2006**
(21) Application number: 05018181.7
(22) Date of filing: 22.08.2005
(51) Int. Cl.: F16H 59/10

(54) **Vehicular automatic transmission and selector lever thereof**

(30) Priority: 23.08.2004 JP 2004242785; 01.04.2005 JP 2005106651
(71) Applicant: Calsonic Kansei Corporation, Tokyo 164-8602 (JP)
(72) Inventor: Sato, Takeshi, Nakano-ku Tokyo 164-8602 (JP); Ohashi, Toshio, Nakano-ku Tokyo 164-8602 (JP); Ogasawara, Takeshi, Nakano-ku Tokyo 164-8602 (JP); Okazaki, Fumihiro, Nakano-ku Tokyo 164-8602 (JP)
(74) Representative: Grünecker, Kinkeldey, Stockmair & Schwanhäusser Anwaltssozietät

(57) **Abstract**

A vehicular automatic transmission includes an operation lever (1; 34; 59; 74; 80) rotatable about a rotation shaft (3; 37; 60) thereof. The transmission includes an output lever (9; 28) rotatable about the rotation shaft of the operation lever to transmit a driving force for switching between ranges. The transmission includes a driving force generator (19; 71) configured to rotate the output lever. The transmission includes a detector (7; 13; 49; 72; 76) configured to detect rotation angle difference between the rotation shaft and the output lever. The transmission includes a controller configured to control the driving force generator to rotate the output lever in a direction of eliminating the rotation angle difference detected.

## Description

### CROSS-REFERENCE TO RELATED APPLICATIONS

This application is based upon and claims the benefit of priority from Japanese Patent Application No. 2004-242785 filed on August 23, 2004 and No. 2005-106651 filed on April 1, 2005; the entire contents of which are incorporated herein by reference.

### BACKGROUND OF THE INVENTION

The invention relates to a vehicular automatic transmission and an automatic selector thereof.

A related vehicular automatic transmission has an operation lever disposed in the vicinity of a driver's seat in a passenger room. The operation lever is operable forward, backward, upward and downward. The operation force of the operation lever is transmitted to a range shifting mechanism of an automatic transmission through an operation force transmitting apparatus such as a cable and a rod. This structure allows the automatic transmission to be shifted within ranges (P, R, N, D and the like).

The operation using the operation lever produces a frictional resistance on a cable or a rod as the operation force transmitting apparatus, and a mechanical resistance during operating a shifting mechanism. If only an action of a lever utilizing the length of the operation lever allows for such resistances, the operation lever becomes longer in length, thus deteriorating flexibility of car's interior layout.

Thus, the related art detects a torque in an operation force transmitting path from the operation lever to the range shifting mechanism. An assisting force to amplify the operation force is produced by an assisting force generator or actuator according to the detected torque. This structure, even with a short operation lever, carries out a reliable shifting operation of the automatic transmission with a small operation force (see, for example, Japanese Patent Application Laid-open No. 2003-301942).

### SUMMARY OF THE INVENTION

The related art, however, detects a torque in the operation force transmitting path, and the assisting force to amplify the operation force is produced by the assisting force generator (actuator) according to the detected torque. This related art is required to precisely detect a magnitude and a direction of the torque using a complicated detecting mechanism, thus causing production of the transmission to be difficult.

The assisting force generator produces an assisting force that is added to the operation force of the operation lever. The assisting force is controlled by normal checking of the relationship in magnitude between the operation force of an operator and the assisting force. This control is rendered difficult due to a considerably large number of variation elements, thus not further enhancing the operability.

The invention is directed to a vehicular automatic transmission, which facilitates detection of the operation of the operation lever, thus further enhancing the operability.

The aspect of the invention provides a vehicular automatic transmission. The transmission includes an operation lever (1; 34; 59; 74; 80) rotatable about a rotation shaft (3; 37; 60) thereof. The transmission includes an output lever (9; 28) rotatable about the rotation shaft of the operation lever to transmit a driving force for switching between ranges. The transmission includes a driving force generator (19; 71) configured to rotate the output lever. The transmission includes a detector (7; 13; 49; 72; 76) configured to detect rotation angle difference between the rotation shaft and the output lever. The transmission includes a controller configured to control the driving force generator to rotate the output lever in a direction of eliminating the rotation angle difference detected.

The operation lever (1; 34; 59; 74; 80) and the output lever (9; 28) may have therebetween a rotation angle difference generator (B1; B2; B3; B4; B5) configured to produce a predetermined rotation angle difference between the operation lever and the output lever. The operation lever and the output lever are engaged to rotate in said direction.

"The rotation angle difference generator" allows a relative rotation between the operation lever and the output lever.

The output lever (9; 28) may include a recess portion (11; 25; 26) for a projection portion (8; 23; 24) of the rotation shaft (3; 37; 60) to be inserted thereinto. The recess portion and the projection portion have the rotation angle difference generator (B1; B2; B3) provided therebetween.

The output lever (9) may have a bearing (10) for the rotation shaft (3) of the operation lever (1) to be inserted thereinto. The bearing has a projection (27) directed outside. The projection and a proximal end of the operation lever have the rotation angle difference generator (B4) provided therebetween.

The output lever (28) may include a bearing (10) corresponding to the rotation shaft (37) of the operation lever (34). The output lever includes a first lever portion (14) extending on one side relative to the bearing to receive a driving force. The output lever includes a second lever portion (29) extending on the other side relative to the bearing. The second lever portion and an extended portion (35) provided to the operation lever have the rotation angle difference generator (B5) provided therebetween.

The second lever portion (29) of the output lever (28) may have an end having an exchangeable third lever portion (30).

The rotation angle difference generator (B5) may have a resilient member (42) or a resilient structure (44) fitted thereinto.

The resilient member (38) or the resilient structure may be pressure sensitive to judge actuation of the operation lever (34).

The bearing (39) of the output lever (28) may be formed in a tubular shape. The rotation shaft (37) of the operation lever (34) is inserted into and supported by the bearing, thus forming a dual structure.

The detector (49) has a structure where two brush bases (53; 54) engage with the rotation shaft and the bearing for rotating, respectively and has a base board (52) interposed therebetween. Detection of rotation angles of respective brush bases relative to the base board allows for detection of a rotation angle difference between the rotation shaft and the bearing.

The rotation shaft (60) of the operation lever (59) may be formed with a check plate (62) having a concavoconvex (61) corresponding to the ranges. The concavoconvex of the check plate is engageable with a resilient member (63) or an end (64) of a resilient structure supported in proximity to the check plate.

The rotation shaft (60) of the operation lever (59) may support, in proximity to the rotation shaft thereof, a check plate (69) having a coneavoconvex (70) corresponding to the ranges. The concavoconvex of the check plate is engageable with an end (68) of a resilient member or a resilient structure (65) provided to the operation lever.

The operation lever (74) may include a position pin (4) to move toward a proximal end of the operation lever by operating a button of a knob (77; 81). The operation lever has a periphery having a casing (5) including a position gate (6) to engage with the position pin corresponding to the ranges. The position gate has a bottom side having both ends in a stroke direction. Both the ends have overstroke portions (79) for the position pin to be inserted thereinto.

The position gate (6) to engage with the position pin (4) may be separated into a normal stroke range (L) and an overstroke range (M). The knob (77) of the operation lever (74) includes a vertical push button (78). When the vertical push button is pushed into lower than a surface of the knob, the position pin moves within the overstroke range to be inserted into the overstroke portions (79) on the both the ends in the stroke direction.

The position gate (6) to engage with the position pin (4) may be separated into a normal stroke range (L) and an overstroke range (M). The operation lever (74) has an upper portion (83) structured to be pushed downward. The knob (81) provided to the upper portion includes a transverse push button (82). When the transverse push button is pushed and the upper portion of the operation lever is pushed into, the position pin moves within the overstroke range to be inserted into the overstroke portions (79) on both the ends in the stroke direction.

The driving force generator (117) may face up or down, with the driving force generator mounted on a vehicle.

The operation lever (104) may support, in proximity to the rotation shaft (103) thereof, a check plate (127) having a concavoconvex (128) corresponding to the ranges. The concavoconvex (128) is engageable with an end (126) of a resilient member or a resilient structure (121) provided to the output lever (107).

The second aspect of the invention provides an automatic selector of a vehicular automatic transmission. The selector includes a rotatable operation lever (231) having a cam guide (232). The selector includes an output lever (237) rotatable relative to the operation lever (231). The output lever includes an actuator (233; 241) including a transmission mechanism (233) having a gear member (233a) having thereon a cam projection (234) engaging the cam guide (232). The selector includes a rotation angle difference generator (B7) between the cam guide (232) and the cam projection (234) and defining a range of relative rotation between the operation lever (231) and the output lever (237).

The operation lever may have a rotation angle detector (243) including a first gear (235). The gear member includes a second gear (236) engaging the first gear (235). The first gear (235) and the second gear (236) are used to detect rotation angle difference between the operation lever (231) and the output lever (237).

The cam guide (232) and the cam projection (234) may have therebetween a guide (238) cocentric with the operation lever (231).

The guide (238) may include a guide channel (238a) cocentric with the operation lever (231). The guide a roller (240) inserted in the guide channel (238a).

According to the aspects, the operation of the operation lever is detected using the rotation angle difference, which achieves the easy detection using a simple detecting mechanism. The driving force generator rotates the output lever in the direction of eliminating the detected rotation angle difference. The operation allows the driving force generator to produce all of operation force that is required to shift the ranges, thus enhancing the operability of the operation lever.

The rotation angle difference generator between the rotation shaft and the output lever produces a predetermined rotation angle difference necessary for the control. The rotation shaft and the output lever have therebetween rotation angle difference corresponding to the rotation angle difference generator, the rotation shaft and the output lever physically engage with each other. Thus, if the driving force generator or the controller is broken down, the operation of rotating the operation lever allows the output lever to be rotated, thus allowing for manual shift of the ranges.

The rotation angle difference generator in the recess portion of the output lever reduces the size of the output lever.

The engagement point of the projection formed to the bearing of the output lever and the proximal end of the operation lever are positioned away from the rotation shaft. The position is advantageous when the operation force is manually transmitted from the operation lever to the output lever.

The second lever portion of the output lever and the extended portion provided on the side of the operation lever have the rotation angle difference generator therebetween. The engagement point is located sufficiently away from the rotation shaft. This structure is more advantageous when the operation force is manually transmitted from the operation lever to the output lever.

The end of the second lever portion of the output lever has an exchangeable third lever portion. Exchange of the third lever portion permits the length of the second lever portion to be changed according to a vehicle type.

The resilient member is fitted into the rotation angle difference generator, thus preventing the rotation angle difference generator B5 from rattling.

The resilient member is pressure sensitive to judge actuation of the operation lever, thus facilitating the control of the driving force generator by the controller.

The rotation shaft of the operation lever and the bearing of the output lever constitute the dual shaft structure. This dual structure allows for the operation lever and the output lever each having high support rigidity.

The single rotation angle difference generator allows for detection of the rotation angle difference between the operation lever and the output lever.

A driver feels click feeling when the operation lever is rotated and operated due to the engagement between the end of the resilient member or the resilient structure and the concavoconvex of the check plate provided to the rotation shaft of the operation lever.

A driver feels click feeling when the operation lever is rotated and operated due to the engagement between the end of the resilient member or the resilient structure and the concavoconvex of the check plate provided to the periphery of the rotation shaft of the operation lever.

If the driving force generator is utilized due to brake-down and the operation lever is manually operated, the operation lever enters the overstroke portions. The operation allows the operation lever to be excessively rotated by a distance corresponding to the rotation angle difference generator, thus transmitting necessary operation stroke.

The normal push operation of the button on the surface of the knob and a push-in operation lower than the surface allow for switch between the normal stroke range and the overstroke range. This switching clearly distinguishes the operations, thus eliminating risk of erroneous operations.

The normal push operation of the button on the surface of the knob and a push-in operation lower than all the upper portion including the knob with the button pushed allow for switch between the normal stroke range and the overstroke range. This switching clearly distinguishes the operations, thus eliminating risk of erroneous operations.

The driving force generator mounted on the vehicle faces up or down. Thus, the driving force generator and peripheral equipment such as an air conditioner located behind the automatic transmission have a less tendency to interfere with each other, thus facilitating the layout of the periphery equipment.

Engagement of the concavo and the end of the resilient member or the resilient structure holds the output lever in the rotation position corresponding to respective ranges.

### BRIEF DESCRIPTION OF THE ACCOMPANYING DRAWINGS

Fig. 1 is a perspective view illustrating an instrument panel according to a first embodiment of the invention;
Fig. 2 is a sectional view illustrating the interior of the instrument panel illustrated in Fig. 1;
Fig. 3 is a perspective view illustrating an automatic transmission according to a first embodiment;
Fig. 4 is a perspective view of an assembly in which a rotation shaft and an output lever are engaged with each other in the automatic transmission illustrated in Fig. 3;
Fig. 5 is an exploded perspective view of a projection portion of the rotation shaft and a recess portion of the output lever illustrated in Fig. 4;
Fig. 6 is a sectional view showing the engaged projection portion and recess portion illustrated in Fig. 5, and a rotation angle difference generator therebetween;
Fig. 7 is a sectional view showing another example of the projection portion and the recess portion illustrated in Fig. 6;
Fig. 8 is a sectional view showing further another example of the projection portion and the recess portion illustrated in Fig. 6;
Fig. 9 is a perspective view of an assembly in which a rotation shaft and an output lever are engaged with each other in an automatic transmission according to a second embodiment;
Fig. 10 is an exploded perspective view of an assembly of the rotation shaft and the output lever illustrated in Fig. 9;
Fig. 11 is a side view of the assembly in which the rotation shaft and the output lever illustrated in Fig. 10 are engaged with each other;
Fig. 12 is a perspective view of an assembly in which a rotation shaft and an output lever according to a third embodiment are engaged with each other;
Fig. 13 is a perspective view of the assembly in which the rotation shaft and the output lever illustrated in Fig. 12 are engaged with each other as viewed from an extended portion;
Fig. 14 is an exploded perspective view of the rotation shaft and the output lever illustrated in Fig. 13 as viewed from the extended portion;
Fig. 15 is a side view of a rotation angle difference generator formed between a bolt and a hole illustrated in Fig. 14;
Fig. 16 is a side view of an assembly in which pressure-sensitive resilient members are incorporated in a rotation angle difference generator according to a fourth embodiment;
Fig. 17 is an exploded perspective view of a rotation shaft and an output lever according to a fifth embodiment as viewed from an extended portion;
Fig. 18 is a sectional view of the assembly in which the rotation shaft and the output lever illustrated in Fig. 17 are engaged with each other;
Fig. 19 is a sectional view showing a dual shaft structure of the rotation shaft illustrated in Fig. 18 and a bearing;
Fig. 20 is a sectional view showing a state in which the rotation angle difference generator illustrated in Fig. 18 has a resilient member fitted therein;
Fig. 21 is a sectional view of a rotation angle difference generator having a resilient structure fitted therein according to a sixth embodiment;
Fig. 22A is a perspective view showing the resilient structure illustrated in Fig. 21;
Fig. 22B is an exploded perspective view of the resilient structure illustrated in Fig. 21;
Fig. 23 is a perspective view of a rotation shaft and the end of a bearing according to a seventh embodiment;
Fig. 24 is a perspective view of a rotation angle sensor according to the seventh embodiment;
Fig. 25 is an exploded perspective view of the rotation angle sensor illustrated in Fig. 24;
Fig. 26 is an exploded perspective view of one of cases and a brush base illustrated in Fig. 25;
Fig. 27 is a perspective view illustrating an assembly of the one case and the brush base illustrated in Fig. 25;
Fig. 28 is a sectional view of the rotation angle sensor illustrated in Fig. 24;
Fig. 29 is a perspective view showing an assembly of an operation lever and a check plate according to an eighth embodiment;
Fig. 30 is a perspective view of an assembly of an operation lever and a check plate according to a ninth embodiment;
Fig. 31 is a sectional view of the resilient structure illustrated in Fig. 30;
Fig. 32 is a perspective view of an output lever assembly according to a tenth embodiment in which a position pin of the operation lever is engaged with a position gate;
Fig. 33 is a side view of the operation lever illustrated in Fig. 32 in which the position pin is engaged with the position gate of the casing;
Fig. 34 is a side view of the operation lever illustrated in Fig. 33;

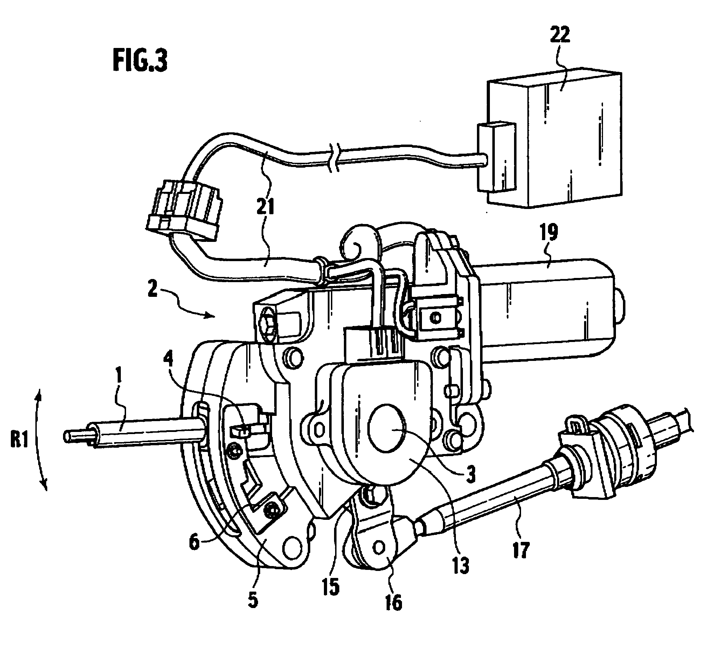

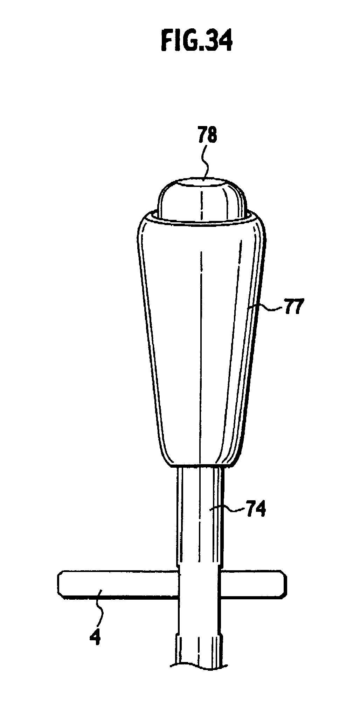

Fig. 3bA is a sectional view of the operation lever illustrated in Fig. 34 in which a button is pushed up to a surface of a knob;

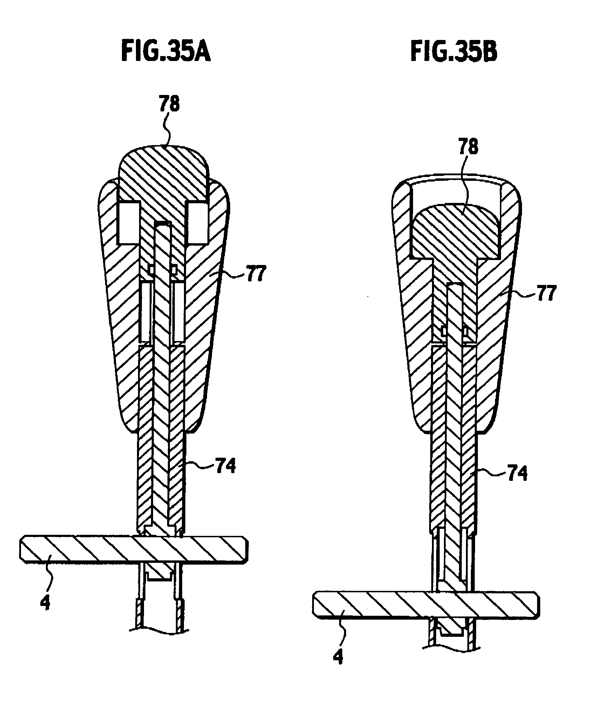

Fig. 35B is a sectional view of the operation lever illustrated in Fig. 34, and shows an overstroke state in which the button is pushed up to a lower side beyond the surface;

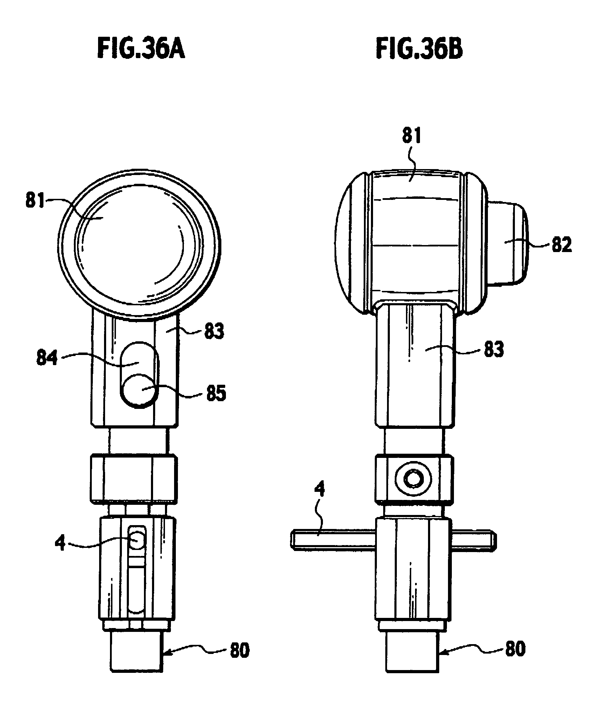

Figs. 36A and 36B are a side view and a front view of an operation lever according to an eleventh embodiment;

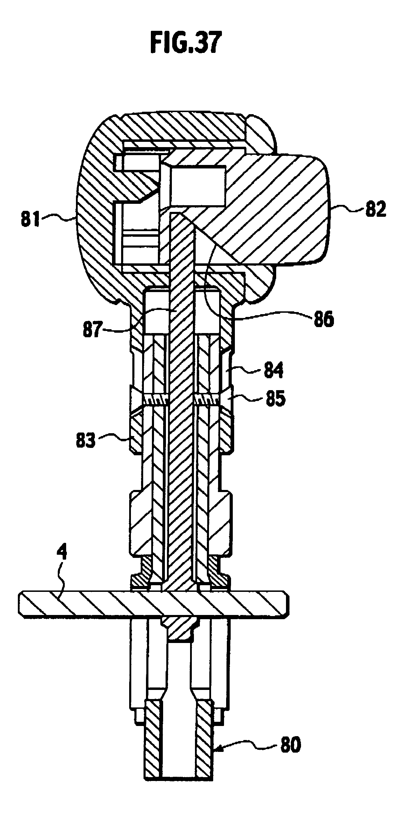

Fig. 37 is a sectional view of the operation lever illustrated in Fig. 36 in which the button is not pushed;

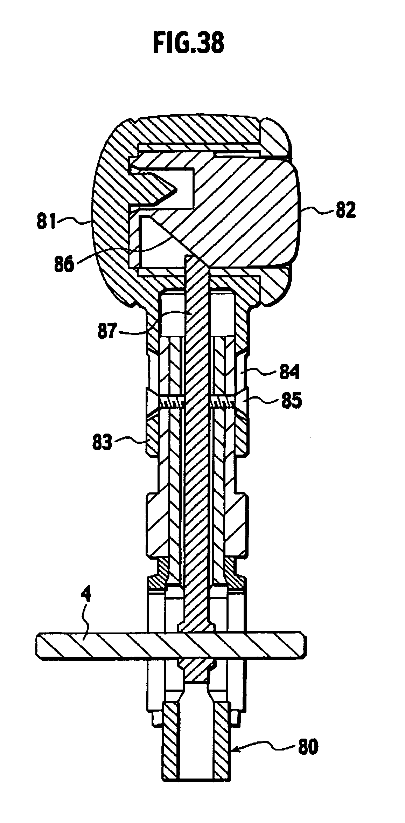

Fig. 38 is a sectional view of the operation lever illustrated in Fig. 37 in which the button is pushed; and

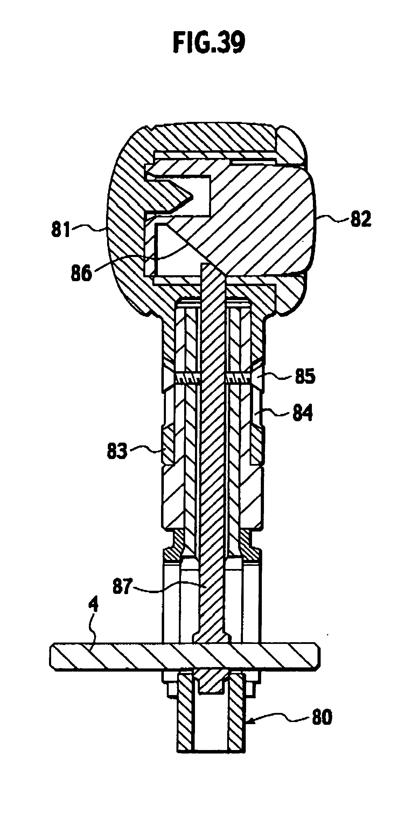

Fig. 39 is a sectional view of the operation lever illustrated in Figs. 38 in which the button is further pushed down;

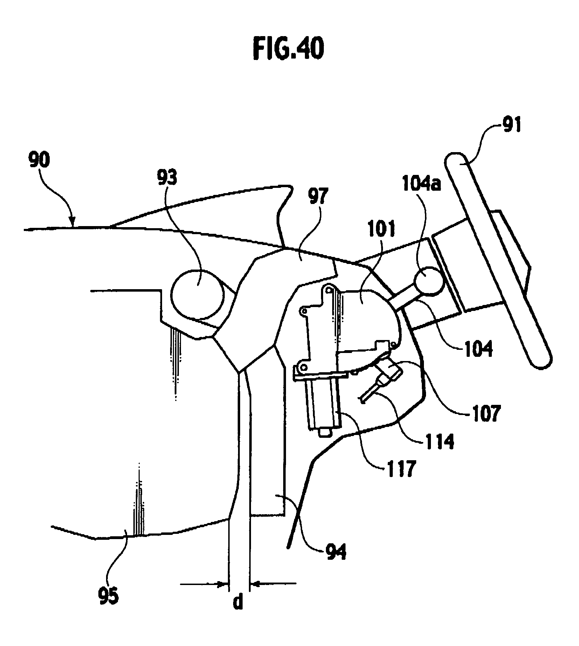

Fig. 40 is a sectional view illustrating the interior of an instrument panel according to a twelfth embodiment;

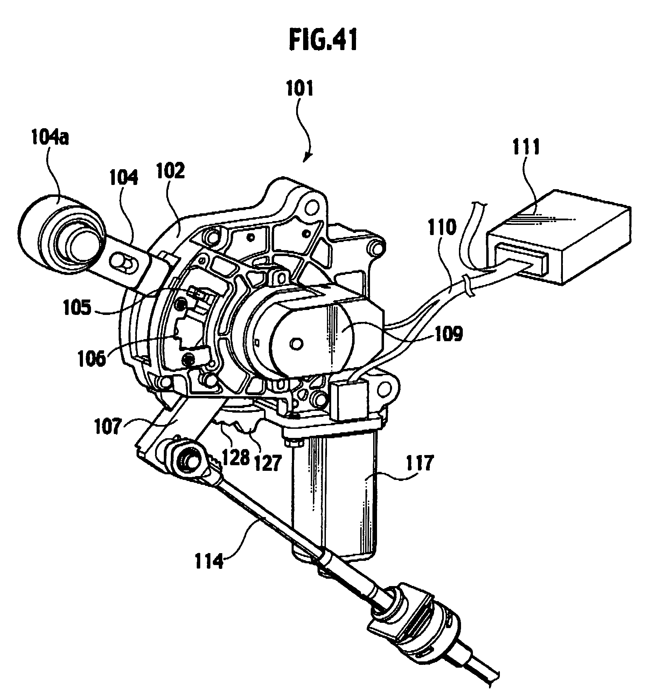

Fig. 41 is a perspective view illustrating the automatic transmission illustrated in Fig. 40;

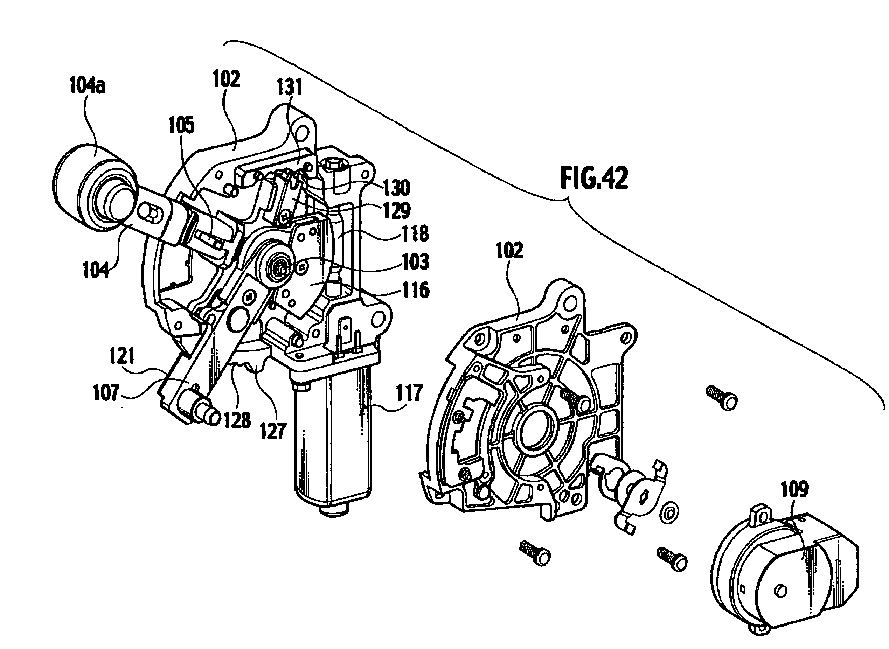

Fig. 42 is an exploded perspective view illustrating the automatic transmission illustrated in Fig. 41;

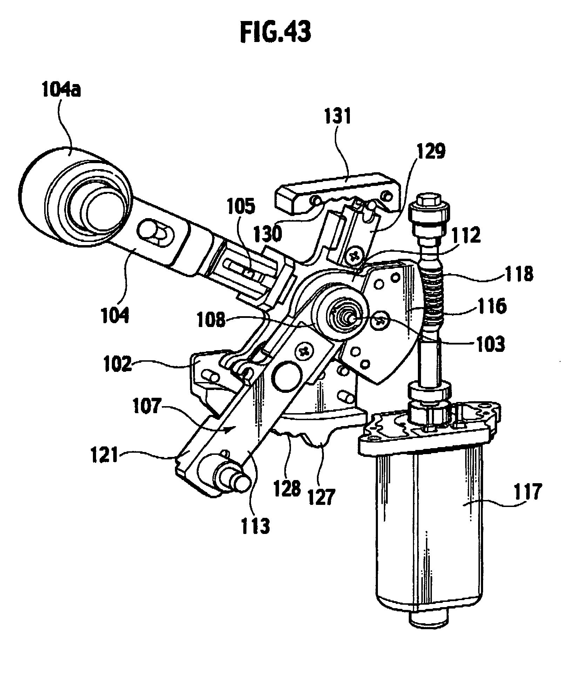

Fig. 43 is a perspective view illustrating the operation lever, the output lever and the motor illustrated in Figs. 41 and 42;

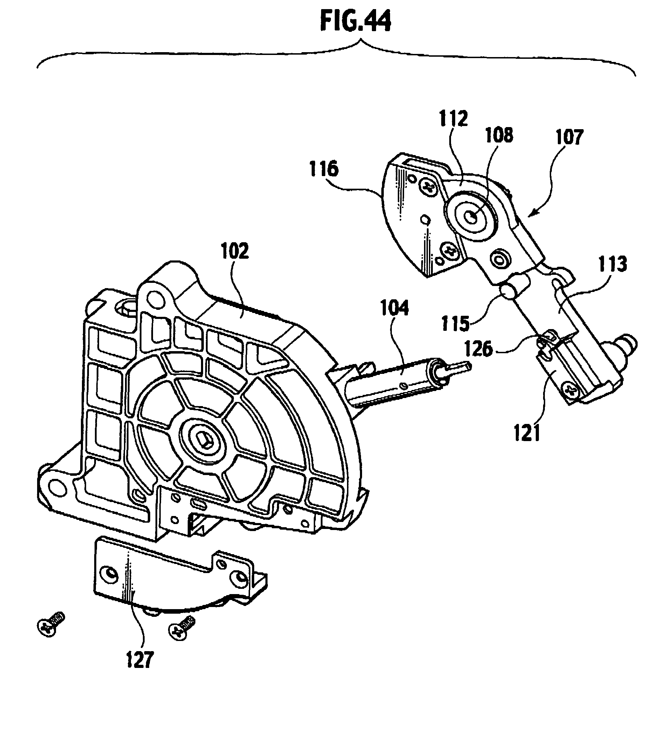

Fig. 44 is an exploded perspective view illustrating a resilient structure on the side of the output lever and a check plate on the side of the casing illustrated in Fig. 43;

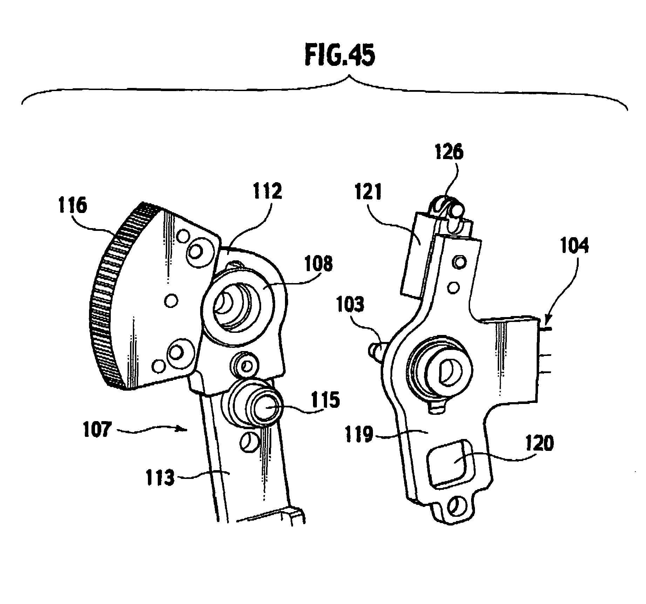

Fig. 45 is an exploded perspective view illustrating the rotation shaft of the operation lever and a bearing of the output lever illustrated in Fig. 44;

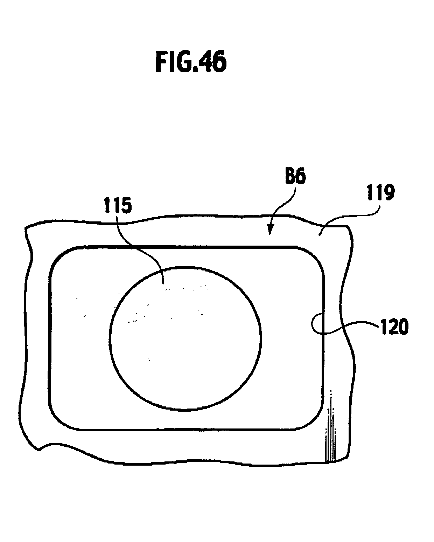

Fig. 46 is a schematic view illustrating the rotation angle difference generator illustrated in Fig. 45;

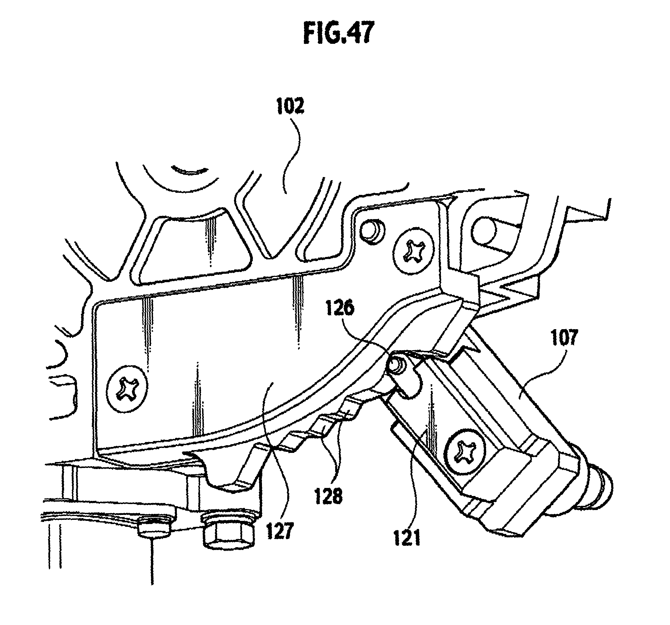

Fig. 47 is a perspective view illustrating the resilient structure on the side of the engaged output lever and the check plate on the side of the casing illustrated in Fig. 43;

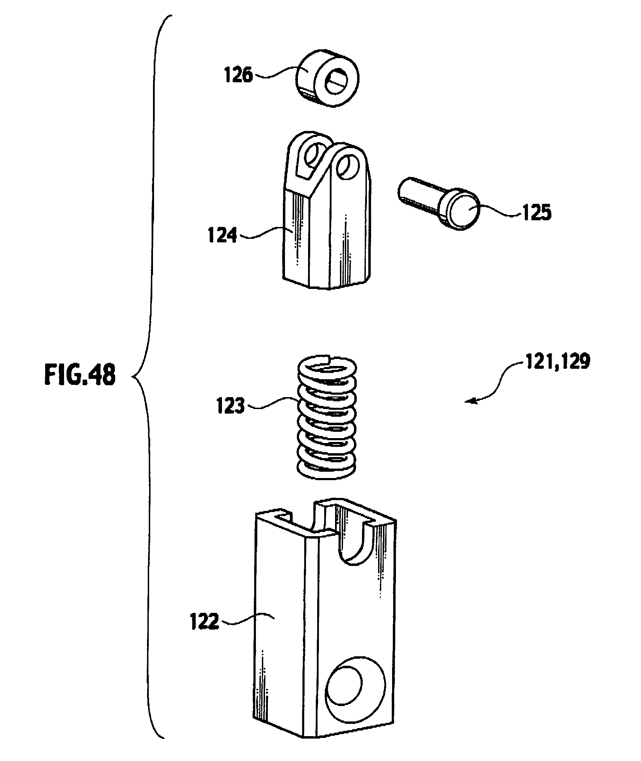

Fig. 48 is an exploded perspective view illustrating the resilient structure illustrated in Fig. 47;

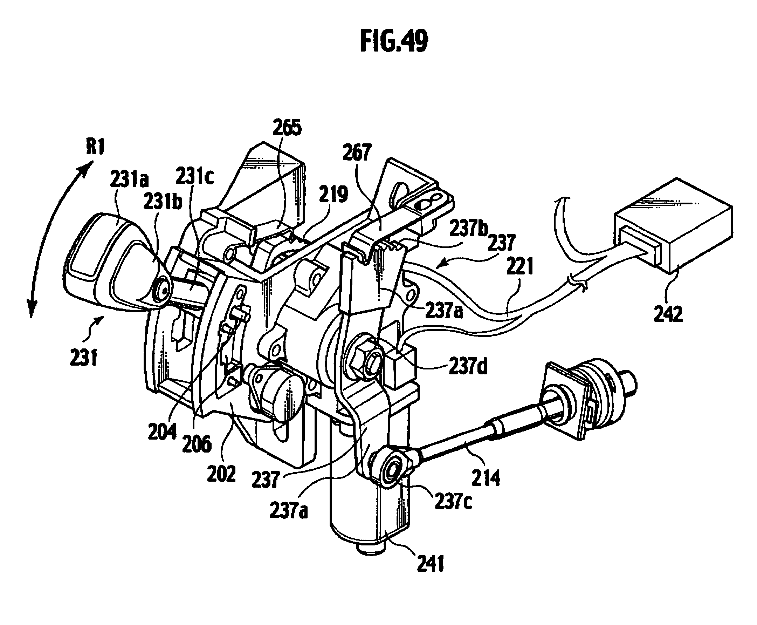

Fig. 49 is a front perspective view of an automatic transmission according to a thirteenth embodiment;

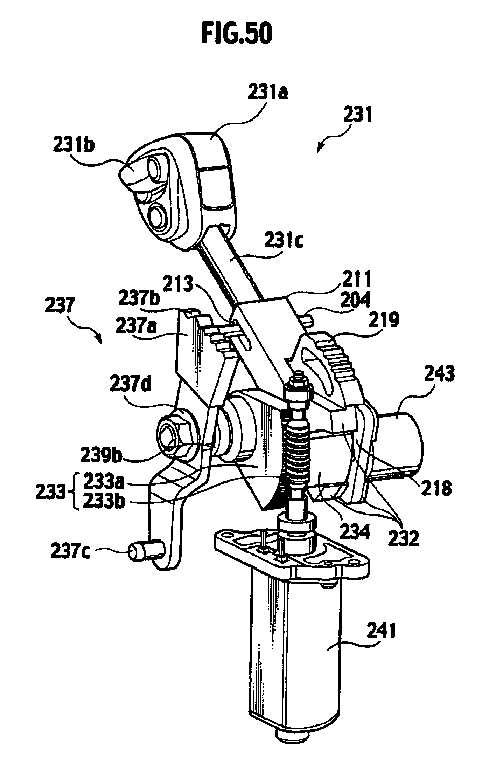

Fig. 50 is a rear perspective view of the automatic transmission illustrated in Fig. 49;

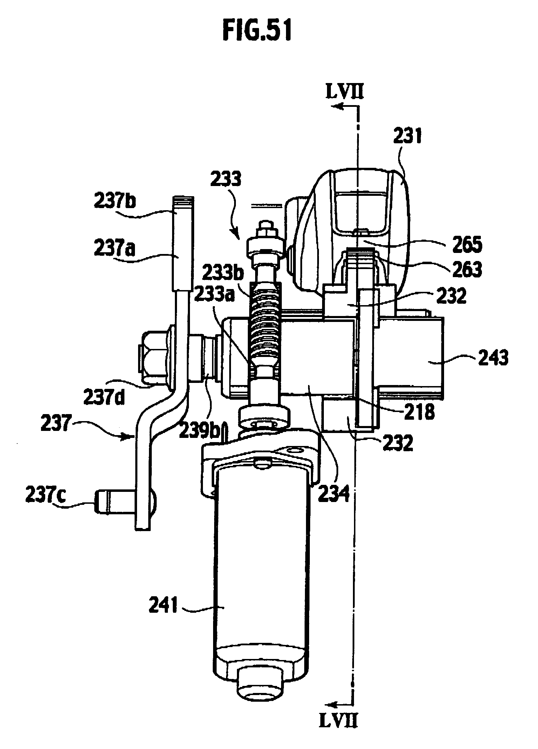

Fig. 51 is a rear view of the automatic transmission illustrated in Fig. 49;

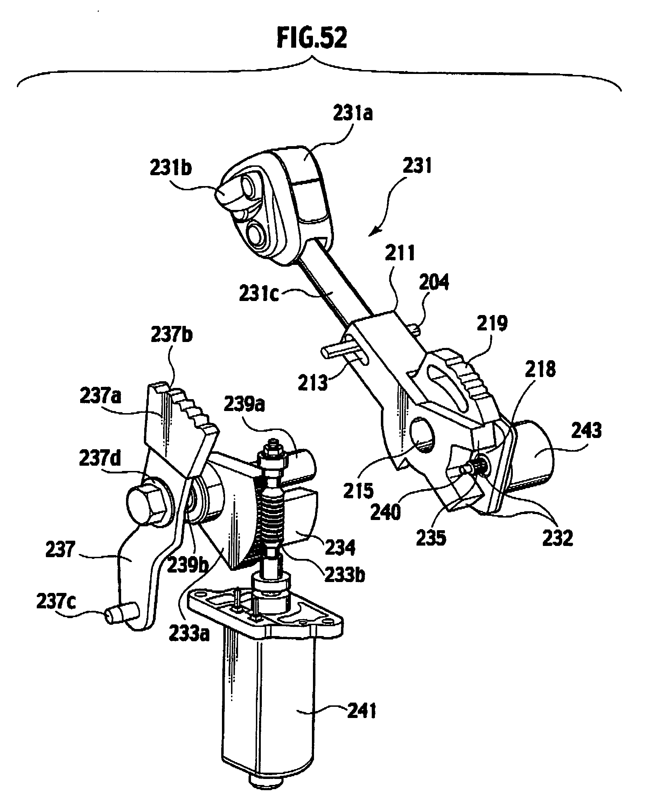

Fig. 52 is a rear exploded perspective view of the automatic transmission illustrated in Fig. 50;

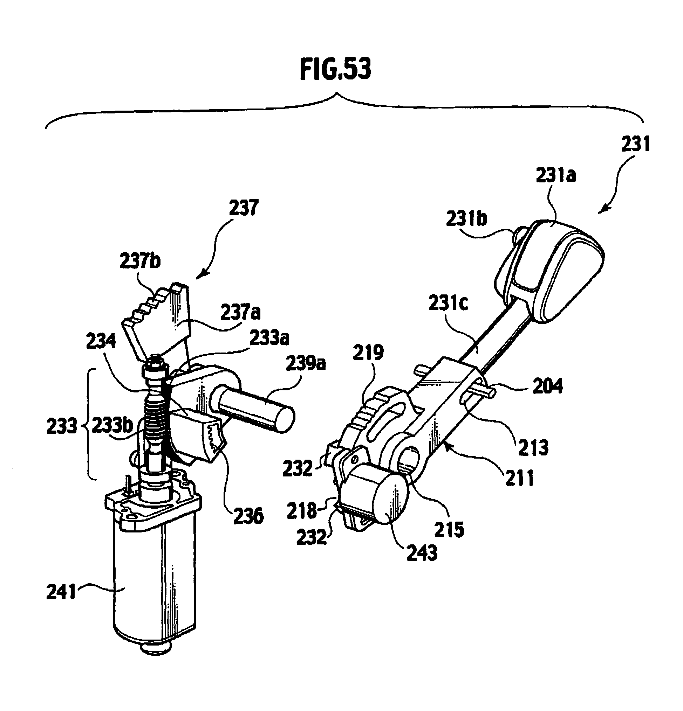

Fig. 53 is an exploded rear perspective view of the automatic transmission illustrated in Fig. 52 as viewed from the opposite side;

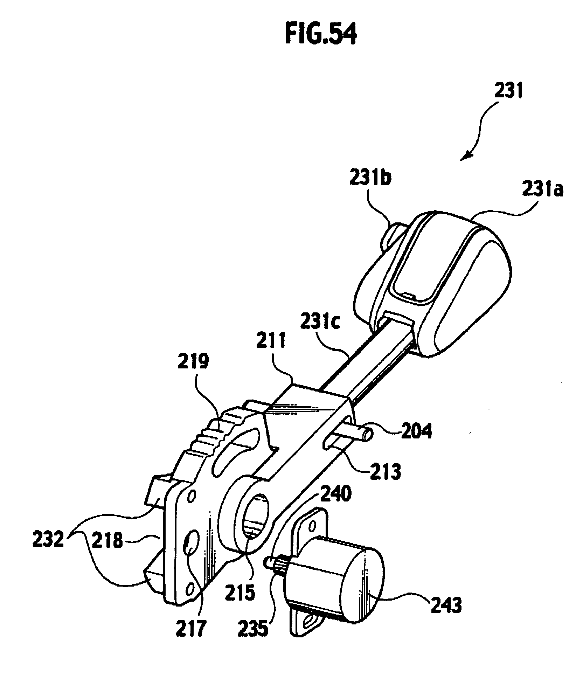

Fig. 54 is a rear perspective view of the operation lever illustrated in Fig. 49;
Fig. 55A is an exploded perspective view of the operation lever and the output lever illustrated in Fig. 49;

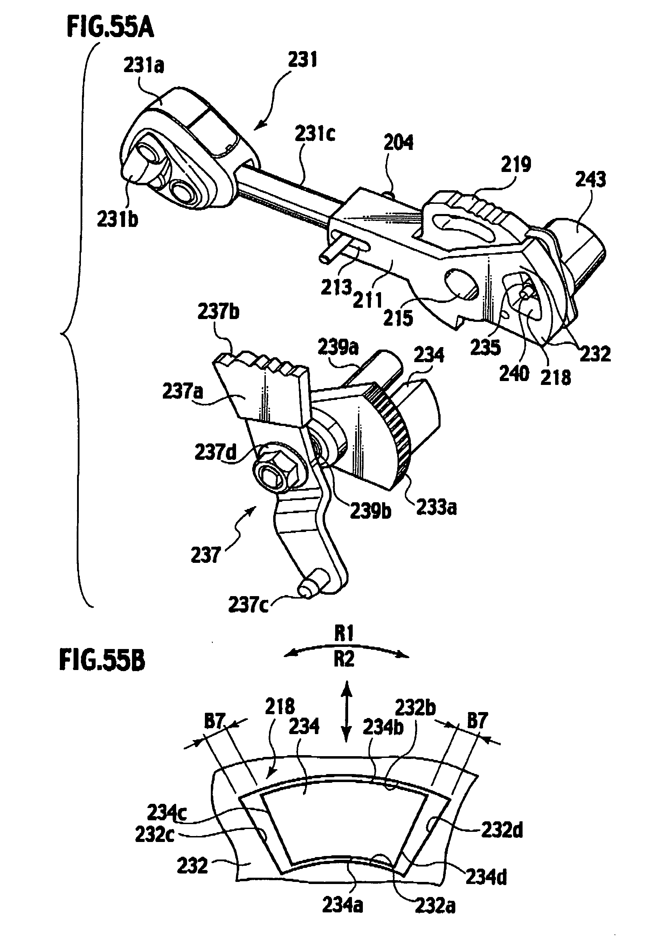

Fig. 55B is an enlarged side view of a cam channel and a cam projection illustrated in Fig. 55A;

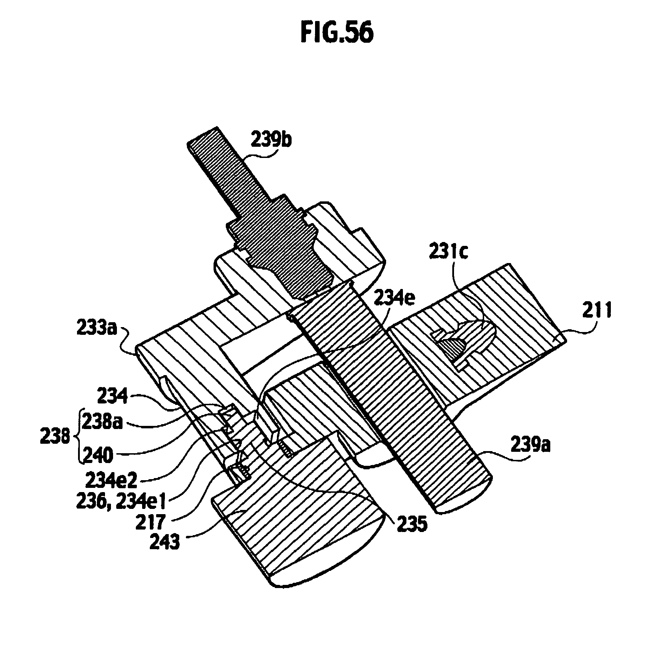

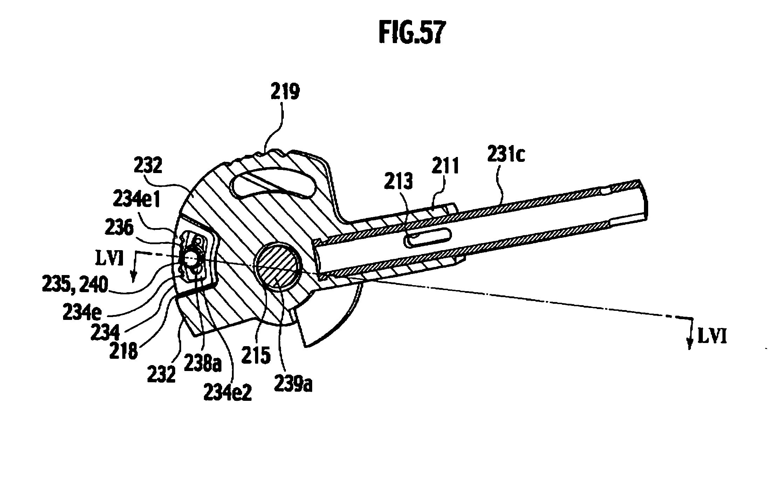

Fig. 56 is a sectional view of the operation lever taken along line LVI-LVI in Fig. 57; and
Fig. 57 is a sectional view taken along line LVII-LVII in Fig. 51.

### DETAILED DESCRIPTION OF THE PREFERRED EMBODIMENTS

An object of the invention is to provide a vehicular automatic transmission, which facilitates detection of the operation of an operation lever, thus further enhancing the operability. To achieve this object, the automatic transmission includes an operation lever that rotates around a rotation shaft. The automatic transmission includes an output lever that rotates around a rotation shaft of the operation lever and transmits a driving force for shifting ranges. The automatic transmission includes a driving force generator that rotates an output lever. The automatic transmission includes a rotation angle difference detector that detects a difference between a rotation angle of the rotation shaft and a rotation angle of the output lever. The automatic transmission includes a control device that controls the driving force generator such that the output lever is rotated in a direction of eliminating the detected rotation angle difference.

Embodiments of the invention will be described below with reference to the drawings.

In the respective embodiments, like parts are designated with like reference characters, and redundant descriptions are omitted. Structures in common to more than one embodiment are explained only in the one that focuses on the respective structures. Therefore, even though like structures are shown in different embodiments, the redundant explanations are omitted in ones that focus on other structures.

### First Embodiment

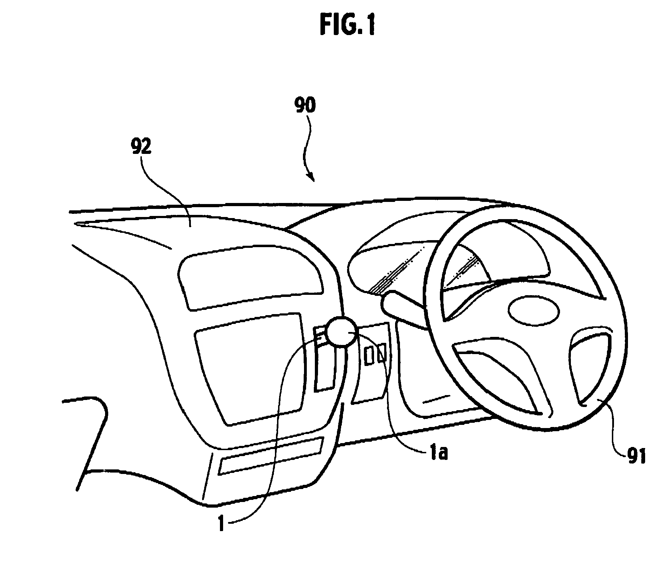

With reference to Figs. 1 to 8, an instrument panel 90 includes a steering wheel 91 on the side of a driver's seat. A center console 92 located at a central portion of the instrument panel 90 in a widthwise direction of the vehicle slightly projects inward of a passenger room as compared with other portions.

With reference to Fig. 1, the center console 92 has a control device 2 disposed therein. The control device 2 includes a casing 5 having a two-piece separation structure. The casing 5 is provided therein with an operation lever 1 that projects inward of the passenger room. The operation lever 1 is vertically operatable for switching ranges. The operation lever 1 is shorter and more compact than that of a conventional operation lever. Therefore, the operation lever 1 has a small projecting amount in the passenger room space, and the operation lever 1 does not deteriorate the flexibility of the interior layout of the passenger room.

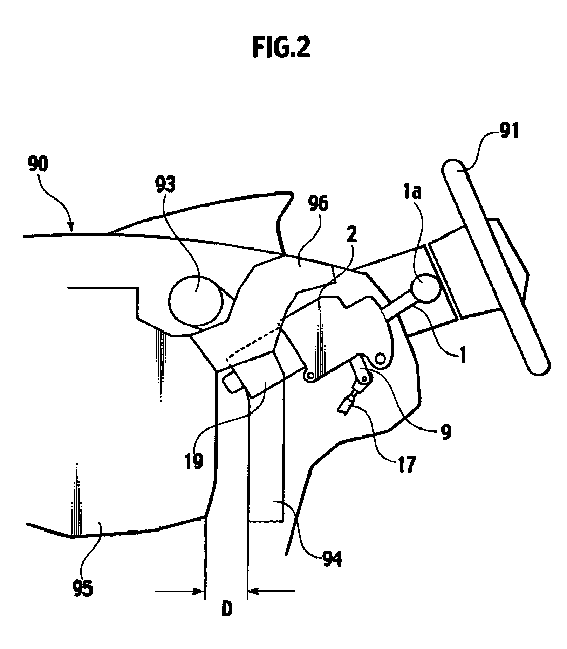

With reference to Fig. 2, the control device 2 is mounted on a steering member 93 and an instrument stay 94 in the instrument panel 90 using a bracket (not illustrated). The control device 2 includes an air conditioner 95 disposed behind the control device 2. The air conditioner 95 includes a duct 96 extending from the air conditioner 95 to a portion on the side of the instrument panel 90. The instrument stay 94 and the air conditioner 95A ensure a predetermined distance D therebetween.

With respect to Figs. 2 to 8, a control device 2 having an operation lever 1 is disposed near a driver's seat. In Figs. 1 and 2, the control device 2 is set on the side. The length of the operation lever 1 is short, and this does not deteriorate the flexibility of the car's interior layout. The operation lever 1 is compact in size, and the operation lever 1 may be disposed in another location (for example, an instrument panel) if necessary.

With reference to Fig. 3, in the control device 2, the operation lever 1 is provided to the proximal end with a rotation shaft 3. The knob (not illustrated) on the distal end of the operation lever 1 is held with a hand to be operated forward and backward R1. The operation allows the operation lever 1 to rotate forward and backward R1 around the rotation shaft 3. The operation lever 1 includes a position pin 4 movable longitudinally of the operation lever 1. The position pin 4 engages respective range-corresponding positions such as a parking position (park position), a neutral position (neutral position), a drive position (forward running position) and a back position (back running position) within a position gate 6 formed to a casing 5. The engagements allows for selection of each range.

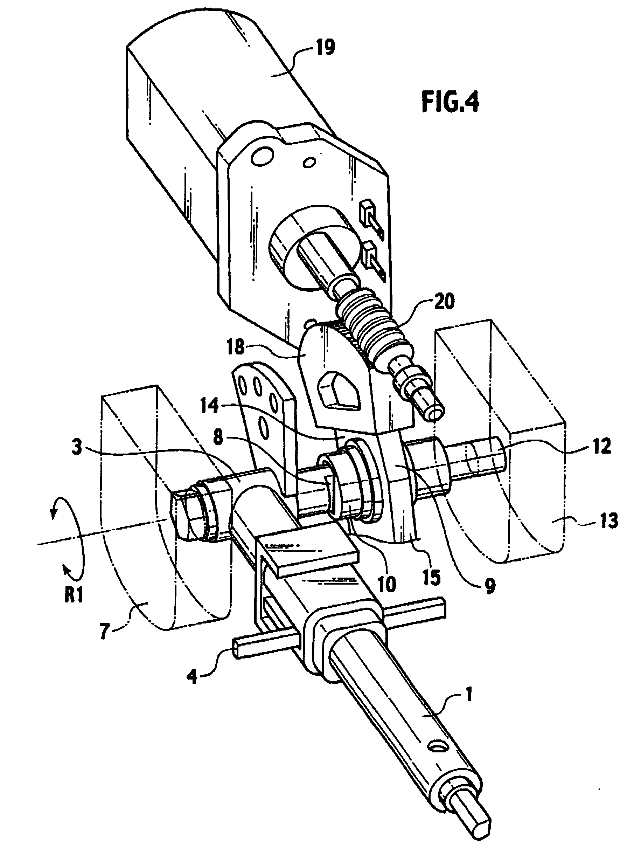

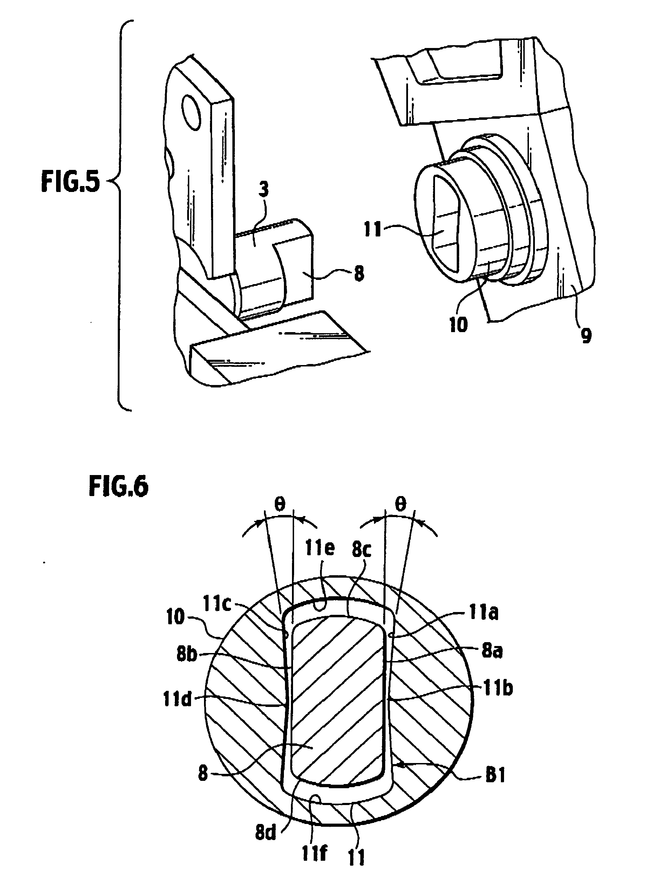

With reference to Fig. 4, one end of the rotation shaft 3 in the operation lever 1 includes a rotation angle sensor (rotation angle detector) 7 that detects a rotation angle of the rotation shaft 3. The rotation angle sensor 7 employs a variable resistor or a rotary encoder, for example. The other end of the rotation shaft 3 includes a "tenon" shaped projection portion 8. With reference to Fig. 6, the projection portion 8 in a rectangular cross section includes first sidewalls 8a and 8b that extend straight and are opposed to each other. The projection portion 8h includes convex upper and lower walls 8c and 8d that are opposed to each other.

With reference to Fig. 6, the rotation shaft 3 is inserted into a "mortise" shaped recess portion 11 formed in a bearing 10 of an output lever 9. The recess portion 11 has a rectangular cross section and second sidewalls 11a and 11c that are opposed to each other and project inwardly. The second sidewalls 11a and 11c respectively have top sides 11b and 11d. The top sides 11b and 11d divide the second sidewalls 11a and 11c into halves, respectively. The halved sidewalls form an angle θ. The recess portion 11 has mutually opposed concave upper and lower walls 11e and 11f. The recess portion 11 and the projection portion 8 have therebetween a rotation angle difference generator B1 for generating a rotation angle difference corresponding to a predetermined rotation angle 2θ or an angular space. The first sidewall 8a and 8b pivot on the top sides 11b and 11d to abut against the second sidewalls 11a and 11c for a relative rotation between the rotation shaft 3 and the output lever 9, thereby allowing for rotation of the rotation shaft 3 and the bearing 10 together.

The projection portion 8 and the recess portion 11 serves as an angular cam mechanism. The side walls 11a and 11c defines an angular cam channel therebetween. The projection portion 8 serves as a cam follower.

With reference to Fig. 4, the output lever 9 includes a detection shaft 12 on the opposite side to the bearing 10. The detection shaft 12 has another rotation angle sensor or a rotation angle detector 13.

The bearing 10 of the output lever 9 has a first lever portion 14 extending therefrom toward one side for receiving a driving force. The bearing 10 also includes a transmitting second lever portion 15 extending toward the other side. The distal end of the second lever portion 15 is formed with an exchangeable third lever portion 16 (see Fig. 3). The third lever portion 16 is connected to a range shifting mechanism (not illustrated) using a rod 17.

The distal end of the first lever portion 14 has a worm wheel 18. The worm wheel 18 is engaged with a worm gear 20 of a motor 19 or a driving force generator or an actuator. The motor 19 faces obliquely back, with the motor mounted on a vehicle, as illustrated in Fig. 2. For preventing interference with the motor 19, the air conditioner 95 is recessed in the layout, thus ensuring a distance D between the air conditioner 95 and the instrument stay 94.

The two rotation angle sensors 7 and 13 and the motor 19 are connected to a control amplifier or control device 22 using harnesses 21.

Next, the operation will be described. When the operation lever 1 is rotated for shifting the ranges, the rotation shaft 3 rotates. The rotation angle sensor 7 detects the rotation angle of the rotation shaft 3. The rotating rotation shaft 3 does not rotate the output lever 9 due to the rotation angle difference generator B1 which generates the predetermined rotation angle 2θ between the rotation shaft 3 and the bearing 10 of the output lever 9. Therefore, a rotation angel difference is generated between the rotation shaft 3 and the bearing 10 of the output lever 9. The rotation angle difference is detected by comparing the two rotation angle sensors 7 and 13.

The rotation angle difference is transmitted to a control amplifier 22 through a harness 21. The control amplifier 22 sends a signal to the motor 19 to rotate the output lever 9 in a direction of eliminating the rotation angle difference. The motor 19 rotates the worm gear 20 under a driving force. The worm gear 20 rotates the worm wheel 18, thereby rotating the output lever 9. This driving force is transmitted to the range shifting mechanism through the rod 17 as a displacement.

According to the first embodiment, the operation of the operation lever 1 is detected using the rotation angle difference, which achieves the easy detection using a simple detecting mechanism. The motor 19 rotates the output lever 9 in the direction of eliminating the detected rotation angle difference. The operation allows the motor 19 to produce all of operation force that is required to shift the ranges, thus enhancing the operability of the operation lever 1.

The rotation angle difference generator B1 between the rotation shaft 3 and the output lever 9 generates a predetermined rotation angle difference that is necessary for the control. The rotation angle difference generator B1 in the recess portion 11 of the output lever 9 reduces the size of the output lever 9.

The distal end of the second lever portion 15 of the output lever 9 is formed with an exchangeable third lever portion 16. Thus, exchange of the third lever portion 16 permits the length of the second lever portion 15 to be changed according to a vehicle type.

Though the rotation shaft 3 and the output lever 9 have rotation angles corresponding to the rotation angle difference generator B1, they are physically engaged with each other to rotate in the identical direction. Therefore, even when the motor 19 or the control amplifier 22 is broken down, the worm wheel 18 and the worm gear 20 disengage from each other to allow for manual rotation of the output lever 9 with the operation lever 1 rotationally operated, thus permitting shift of the ranges.

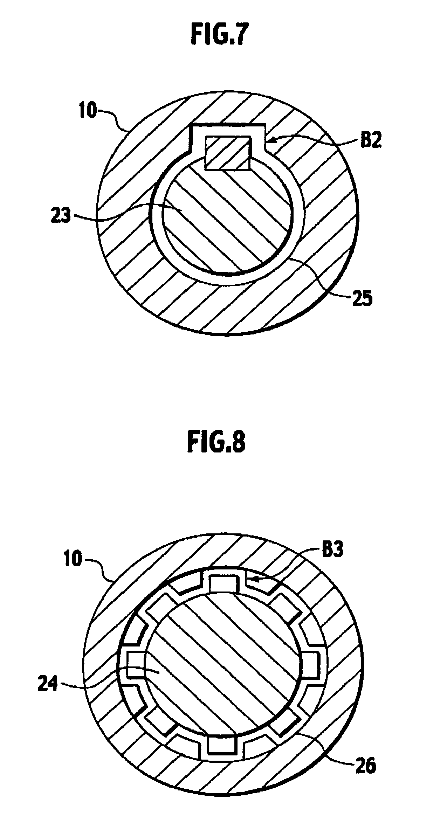

The projection portion 8 and the recess portion 11 may be a projection portion 23 of the operation lever 1 and a recess portion 25 of the output lever 9 having a key structure as illustrated in Fig. 7. The projection portion 8 and the recess portion 11 may be a projection portion 24 of the operation lever 1 and a recess portion 26 of the output lever 9 having a coupling structure as illustrated in Fig. 8.

### Second Embodiment

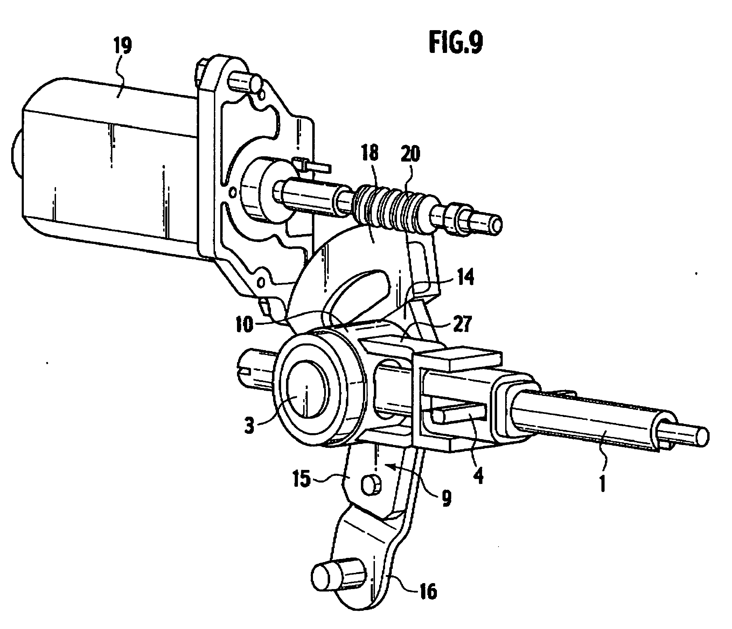

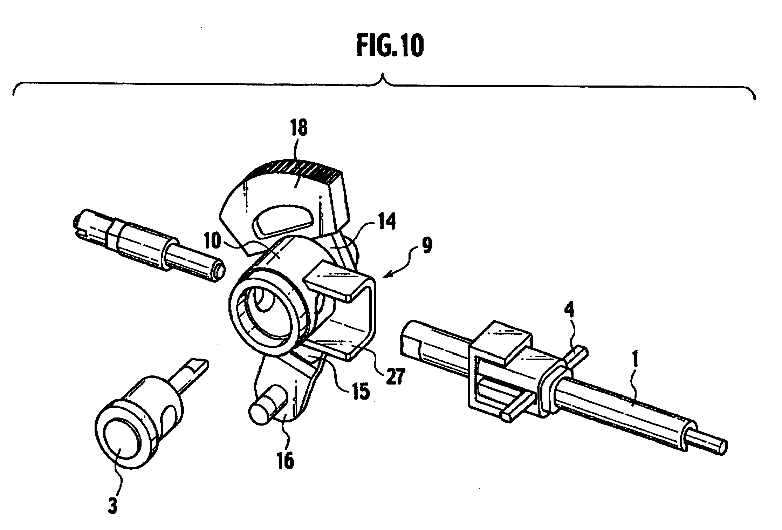

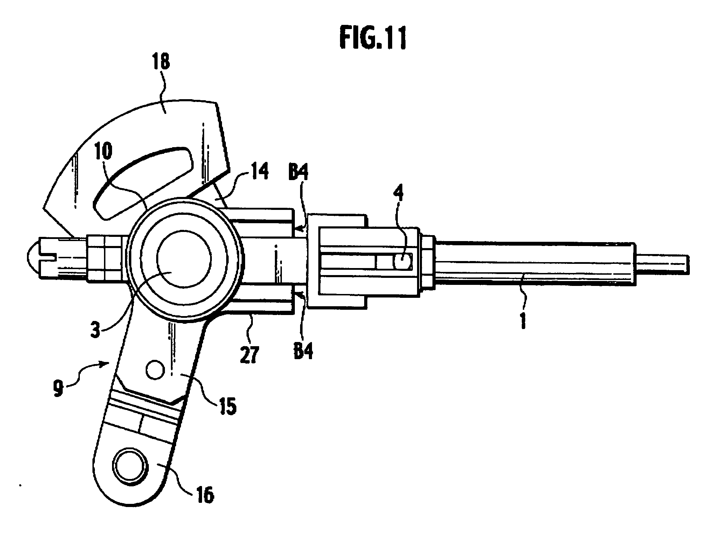

With reference to Figs. 9 to 11, the rotation shaft 8 of the operation lever 1 is inserted into and coupled to the proximal end of the operation lever 1, with the rotation shaft 3 inserted into the bearing 10 of the output lever 9. The bearing 10 has a projection 27 in a U-shaped cross section formed thereto from the outside along the operation lever 1.

The projection 27 has opposed walls having therebetwen a distance or a space greater than the diameter of the proximal end of the operation lever 1. The projection 27 and the operation lever 1 have a rotation angle difference generator B4 therebetween, thus serving as an angular cam mechanism.

According to this embodiment, the projection 27 formed on the bearing 10 of the output lever 9 and the proximal end of the operation lever 1 have therebetween the engagement point that is located away from the rotation shaft 3. The position is advantageous when the operation force is manually transmitted from the operation lever 1 to the output lever 9.

### Third Embodiment

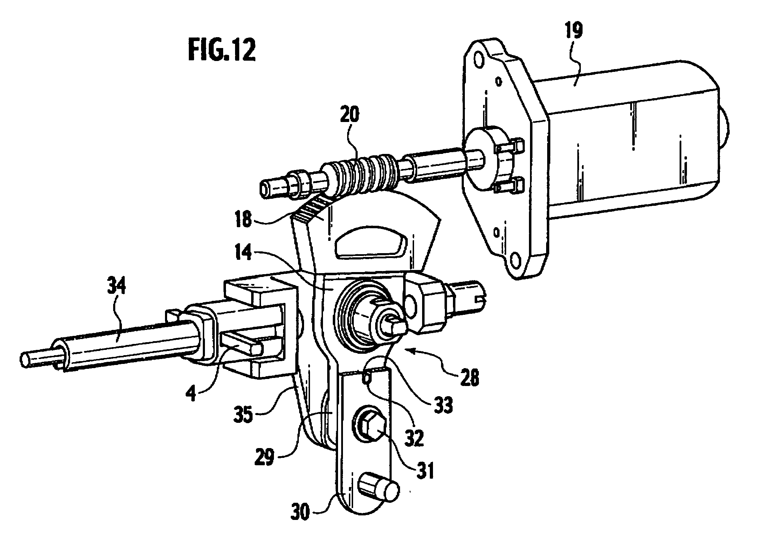

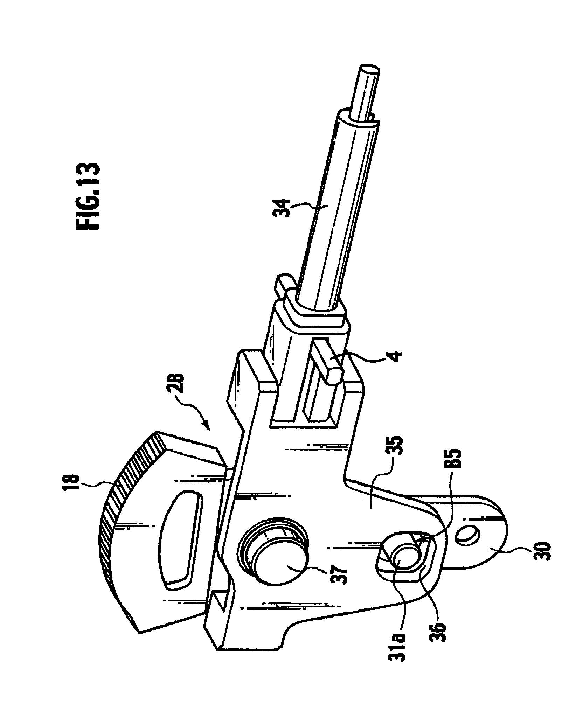

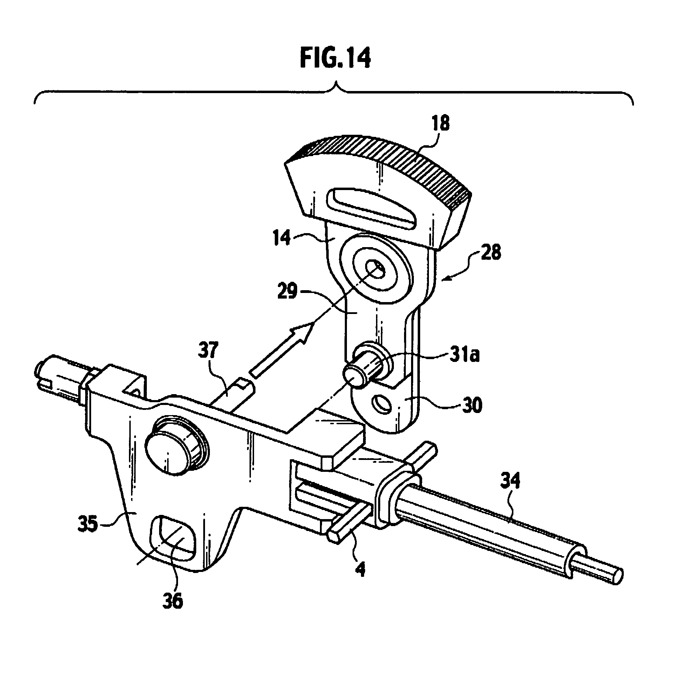

With reference to Figs. 12 to 15, the distal end of the second lever portion 29 of an output lever 28 is formed with an exchangeable third lever portion 30. The third lever portion 30 is mounted on the second lever portion 29 using a bolt 31. Engagement of a groove 32 and a pin 33 with each other prevents the third lever portion 30 from rotating.

The operation lever 34 has, on the side thereof, an extended portion 35 extending in a direction along the second lever portion 29. The extended portion 35 has a hole 36. The bolt pin 31a is inserted into the hole 36. The bolt pin 31a is coupled to the end of the bolt 31 that mounts the third lever portion 30 on the second lever portion 29. The hole 36 and the end of the bolt pin 31a constitute a rotation angle difference generator B5 therebetween, thus serving as an angular cam mechanism.

According to this embodiment, the second lever portion 29 of the output lever 28 and the extended portion 35 provided on the side of the operation lever 34 have the rotation angle difference generator B5 therebetween. The engagement point (engagement point between the tip end of the bolt pin 31a and the hole 36) is located sufficiently away from the rotation shaft 37. This structure is more advantageous when the operation force is manually transmitted from the operation lever 34 to the output lever 28.

According to this embodiment, the rotation angle difference generator B5 is formed utilizing the bolt pin 31a of the bolt 31 that mounts the distal end lever portion 30 on a transmitting lever portion 29. This structure does not require a part such as a projection pin of a later-described twelfth embodiment, thus reducing the number of parts.

### Fourth Embodiment

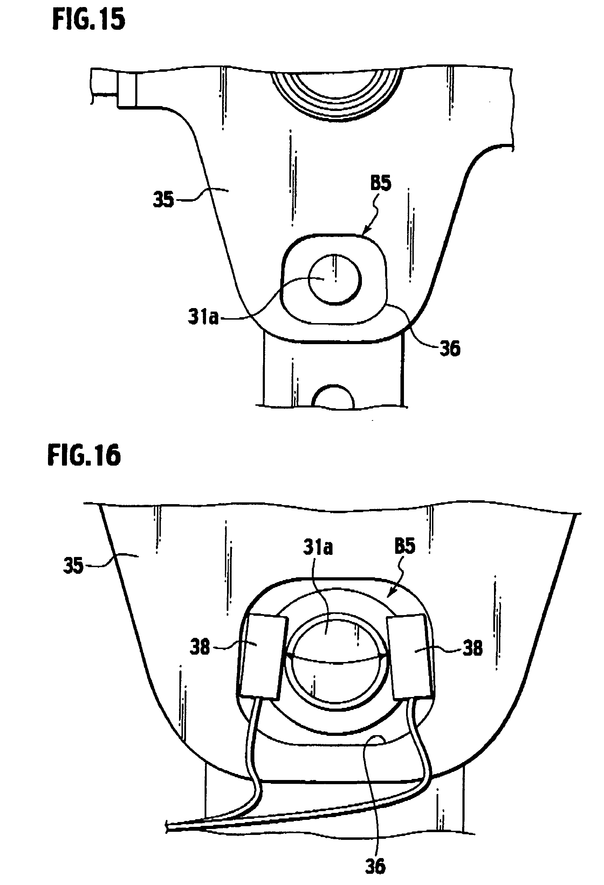

With reference to Fig. 16, according to a structure of this embodiment, the bolt pin 31a and the wall of the hole 36 have a pair of pressure-sensitive resilient members 38 provided therebetween. If the pair of resilient members 38 are pushed by the bolt pin 31a, the resilient members 38 detect that pressure, and sense a rotation angle difference produced and also the directivity. Detection of a signal by the control amplifier 22 allows for judgment on the actuation of the operation lever 34, thus facilitating control of the motor 19 by the control amplifier 22.

### Fifth Embodiment

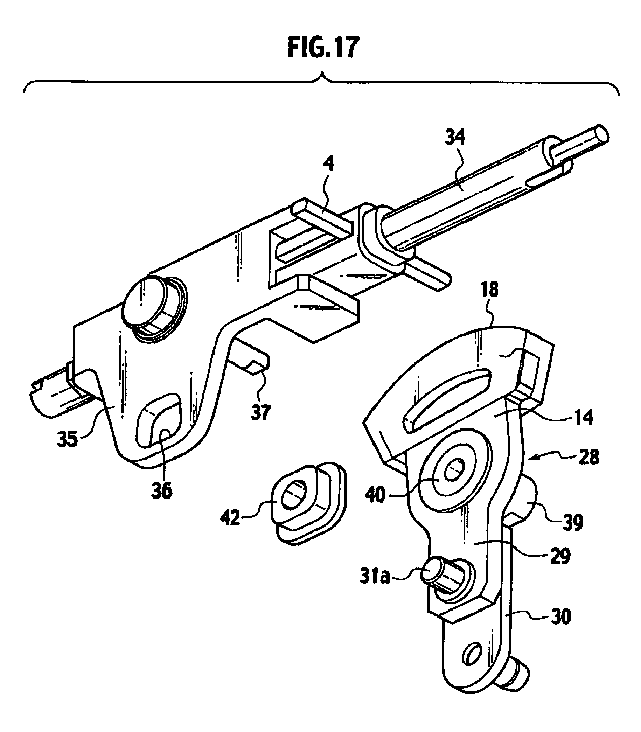

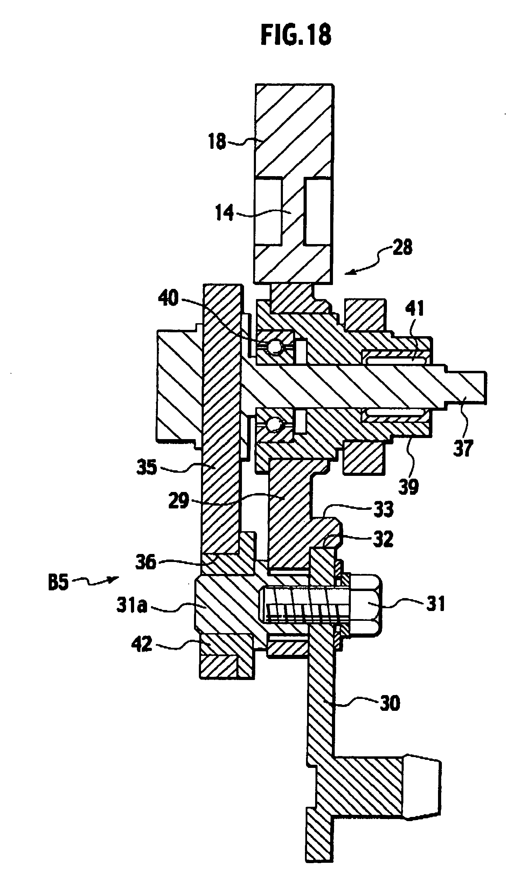

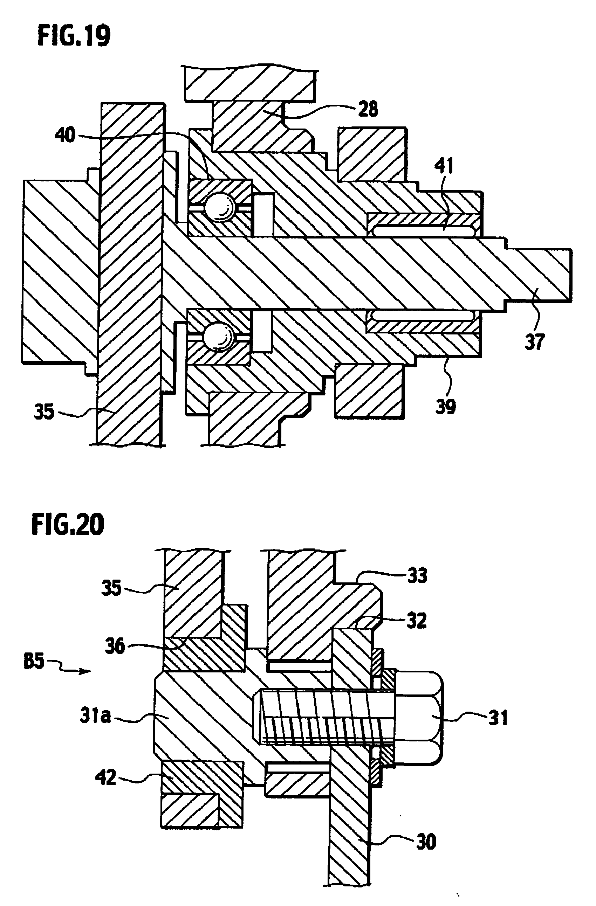

With reference to Figs. 17 to 20, the bearing 39 of the output lever 28 is of a tubular shape, and the rotation shaft 37 of the operation lever 34 is inserted into the bearing 39. The rotation shaft 37 and the bearing 39 form a dual structure. The distal end of the rotation shaft 37 projects from the other side of the bearing 39. Both ends of the bearing 39 are supported by bearings 40 and 41.

The bolt pin 31a and the hole 36 of the extended portion 35 on the side of the operation lever 34 have the rotation angle difference generator B5 therebetween, serving as an angular cam mechanism. A resilient member 42 is fitted into the rotation angle difference generator B5.

According to this embodiment, the rotation shaft 37 of the operation lever 34 and the bearing 39 of the output lever 28 constitute the dual shaft structure. In this dual structure, the operation lever 34 and the output lever 28 having high support rigidity have high support rigidity, and the rotation shaft 37 and the bearing 39 are not inclined.

The resilient member 42, into which the rotation angle difference generator B5 is inserted, prevents the rotation angle difference generator B5 from rattling.

### Sixth Embodiment

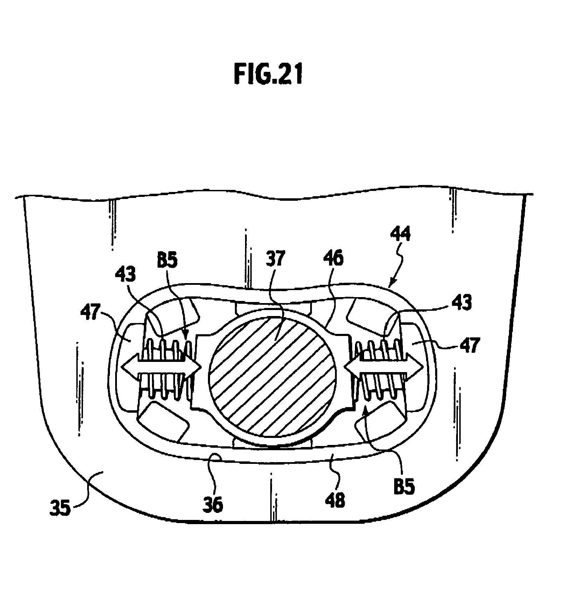

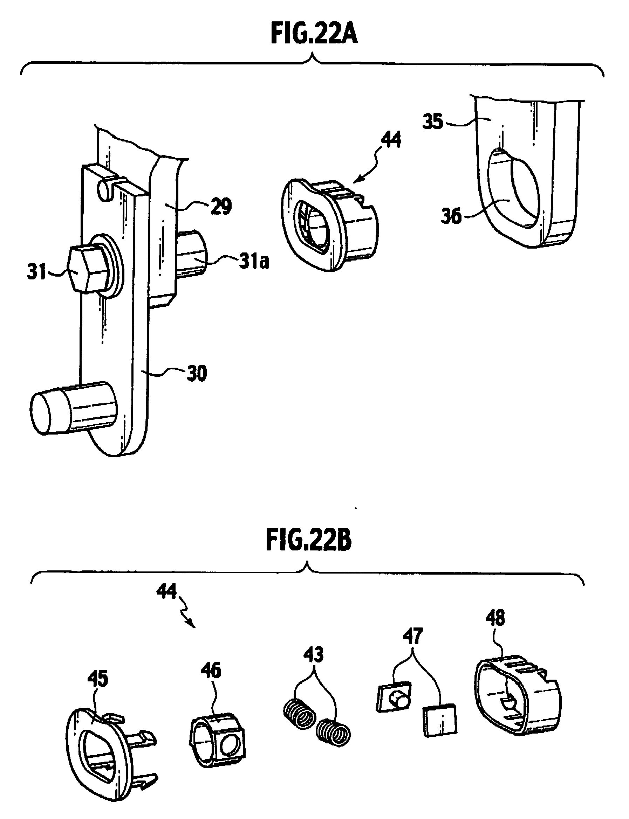

With reference to Figs. 21, 22A and 22B, the rotation angle difference generator B5 between the bolt pin 31a and the hole 36 has a resilient structure 44 interposed utilizing a spring 43. As illustrated in Fig. 22B, the resilient structure 44 includes a cover 45, a holder 46, a spring 43, a stopper 47, and a case 48. Like the previous embodiment, the resilient structure 44 prevents the rotation angle difference generator B5 from rattling.

### Seventh Embodiment

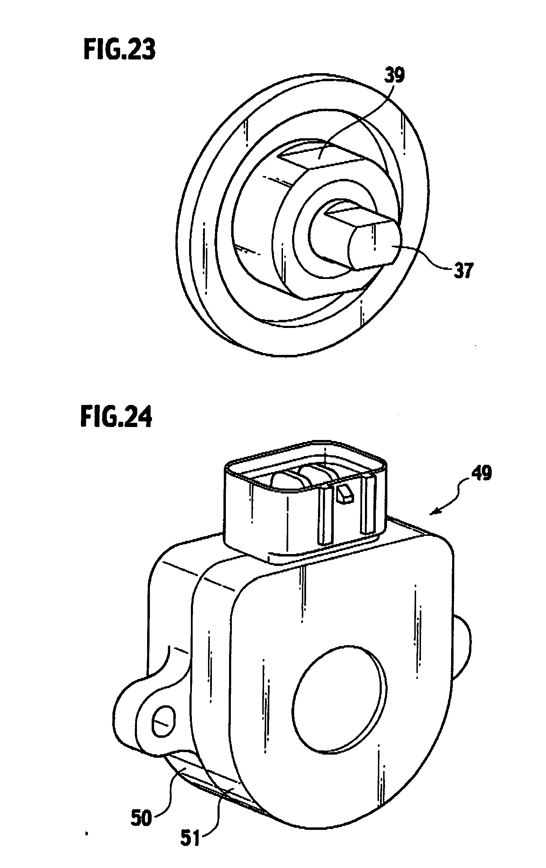

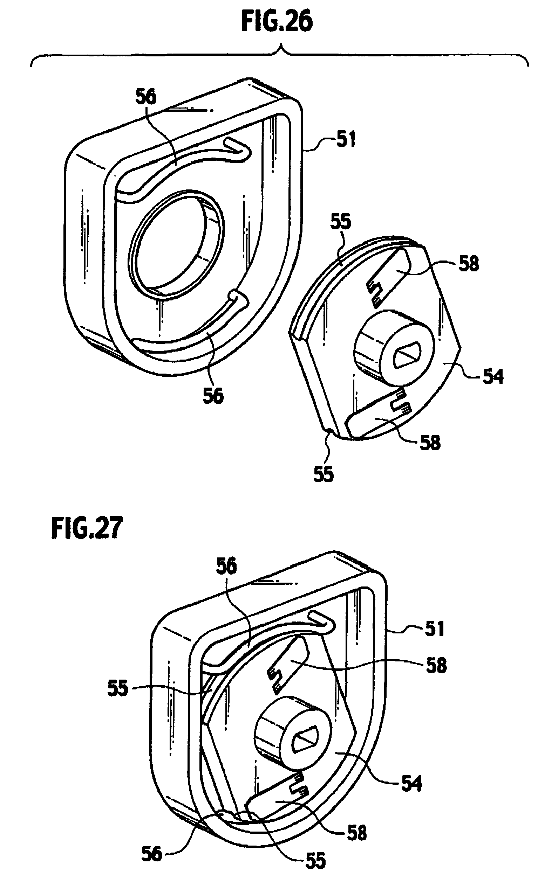

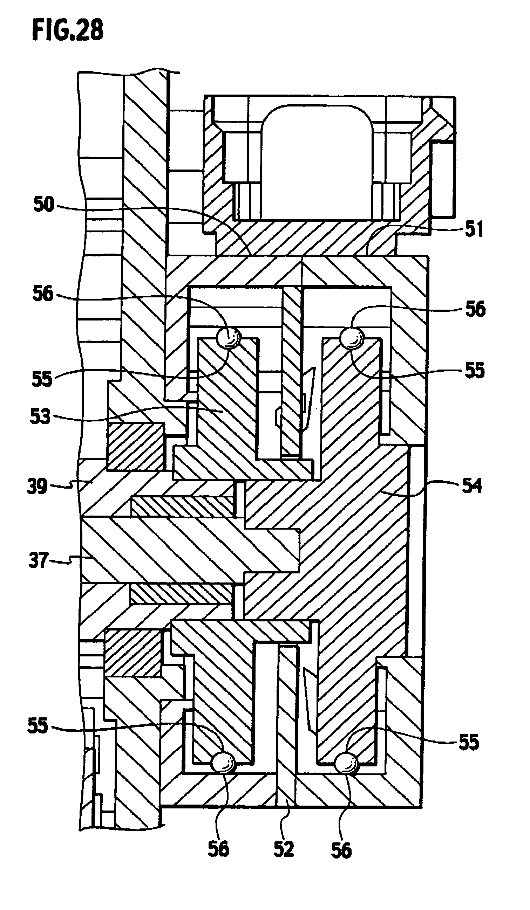

With reference to Figs. 23 to 28, one rotation angle sensor 49 illustrated in Fig. 24 is mounted on the end of the bearing 39 and the rotation shaft 37 of dual shaft structure illustrated in Fig. 23. The rotation angle sensor 49 detects a rotation angle difference between the rotation shaft 37 and the bearing 39 or output lever 28.

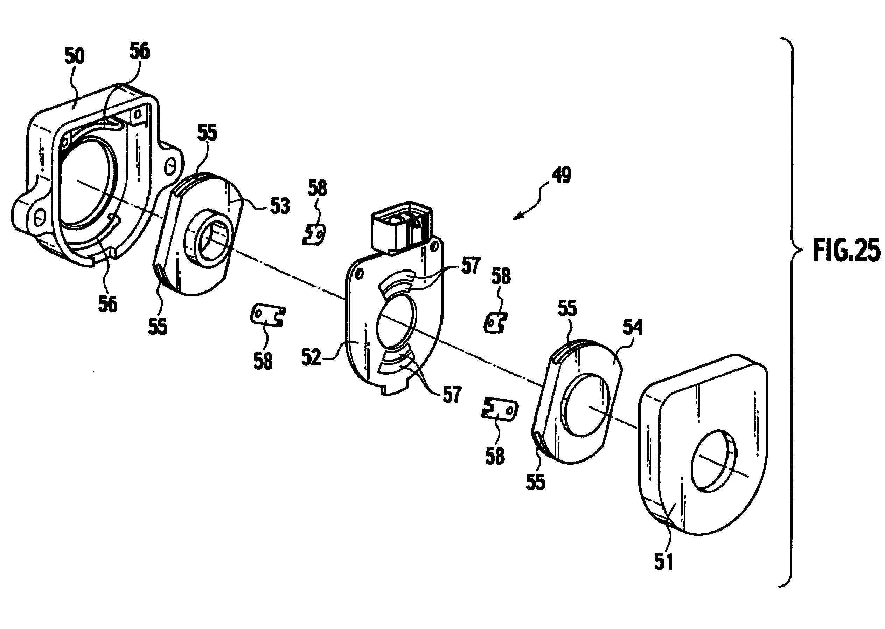

With reference to Fig. 25, the rotation angle sensor 49 includes a board 52 in cases 50 and 51. The board 52 is interposed between two brush bases 53 and 54. The two brush bases 53 and 54 have end grooves 55 that are engaged with wire frames 56 of the cases 50 and 51. With this structure, the brush bases may rotate independently. One of the brush bases 54 engages with the distal end of the rotation shaft 37 to rotate together with the rotation shaft 37 integrally. The other brush base 53 engages with the end of the bearing 39 to rotate together with the bearing 39 integrally. The brush bases 53 and 54 have contact brushes 58 that come into contact with resistors 57 of the board 52, and the contact brushes 58 detect the respective rotation angles.

Therefore, the single rotation angle sensor 49 detects a rotation angle difference between the operation lever 34 and the output lever 28, thus reducing the apparatus in size.

### Eighth Embodiment

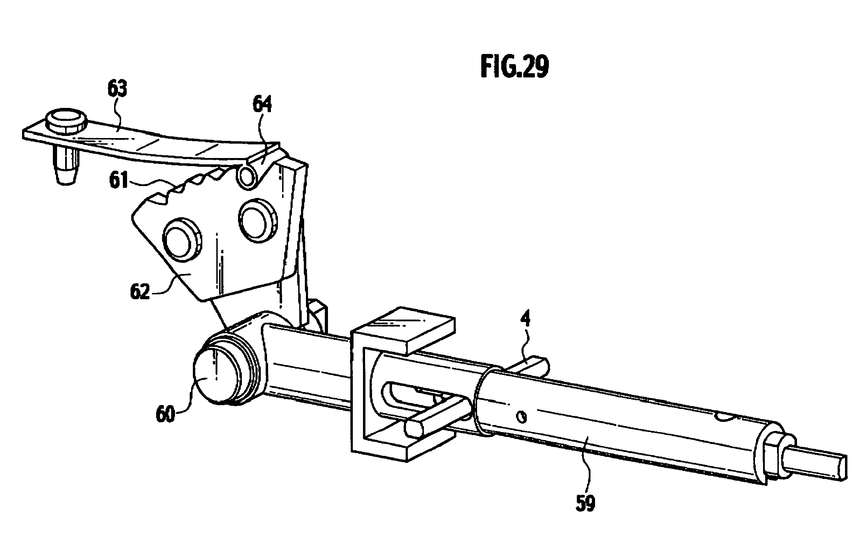

With reference to Fig. 29, the rotation shaft 60 of an operation lever 59 has a substantially fan-like check plate 62 including concavoconvex 61 corresponding to the ranges. The concavoconvex 61 of the check plate 62 engages with the end 64 of a leaf spring (resilient member) 63 supported by the periphery of the check plate 62.

According to this embodiment, a driver feels click feeling when the operation lever 59 is rotated and operated due to the engagement between the end 64 of the leaf spring 63 and the concavoconvex 61 of the check plate 62 provided to the rotation shaft 60 of the operation lever 59.

### Ninth Embodiment

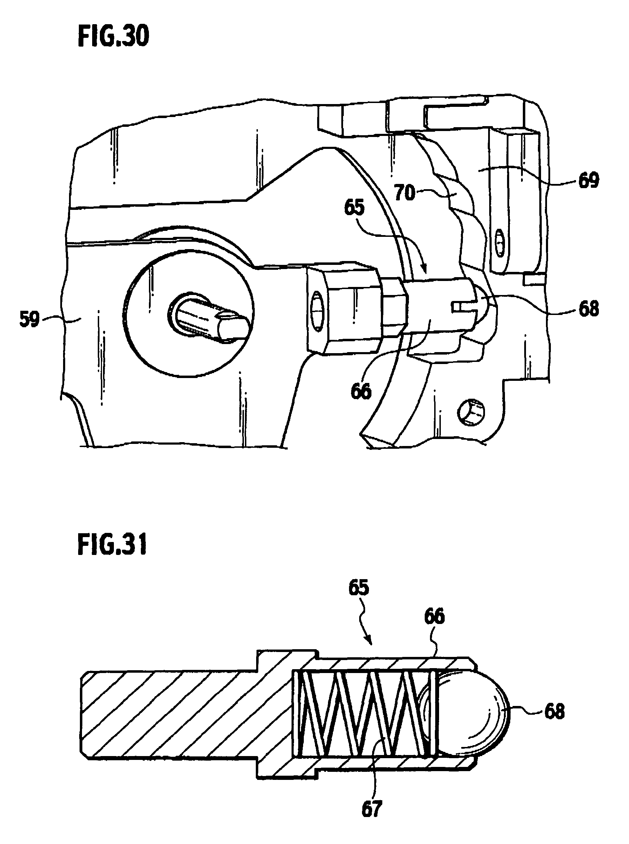

With reference to Figs. 30 and 31, the operation lever 59 includes a resilient structure 65 on the opposite side. The rotation shaft 65 includes therein a spring 67 in a tubular holder 66. The spring 67 biases a ball 68 as a "distal end". The ball 68 does not come out from the holder 66 due to a slightly narrowed entrance of the tubular holder 66.

The resilient structure 65 has a check plate 69 that is supported separately from the operation lever 59 at the peripheral opposed position. The check plate 69 has a concavoconvex 70 on the curved inner surface. The concavoconvex 70 engages a ball 68 of the resilient structure 65 biased by the spring 67. A driver feels click feeling when the operation lever 59 is rotated and operated due to this engagement.

### Tenth Embodiment

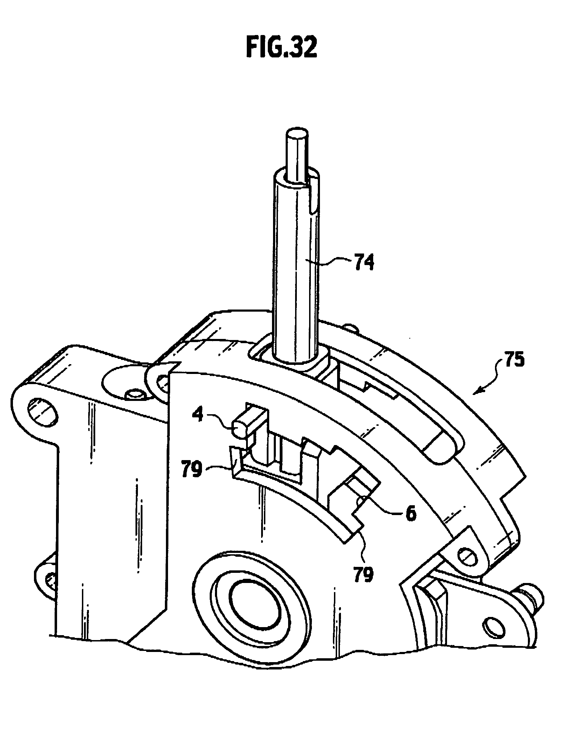

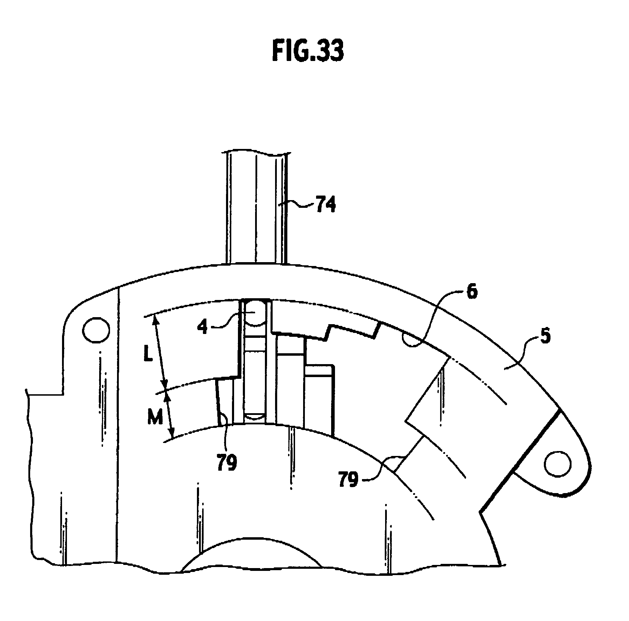

With reference to Figs. 32 to 35B, an operation lever 74 is provided at the distal end with a knob 77. The knob 77 includes a vertical push type button 78. Push against the button 78 lowers the position pin 4. Release of the push force against the button 78 permits the position pin 4 to rise and engage with the position gate 6 of the casing 5.

The position pin 4 engages with the position gate 6 of the casing 5. The upper portion of the position gate 6 has a normal stroke range L and an overstroke range M set thereon. The opposite ends of the overstroke range M in the stroke direction have an overstroke portion 79 for the position pin 4 to be inserted thereinto.

In a normal case that the button 78 of the knob 77 is pushed up to the surface (upper surface) of the knob 77, the position pin 4 moves in the normal stroke range L to select a range (see Fig. 35A). If the motor 71 or the control amplifier 22 is broken, the button 78 is pushed lower than the surface of the knob 77 and the operation lever 74 is manually operated (see Fig. 35B).

When the button 78 is pushed lower than the surface of the knob 77, the position pin 4 moves to the overstroke range M, and the opposite ends enter the overstroke portion 79. Therefore, the manually operated operation lever 74 is excessively rotated by a distance corresponding to the rotation angle difference generator, and necessary operation stroke is transmitted to an automatic transmission 73 through a wire (not illustrated).

This embodiment employs a normal push operation of the button 78 on the surface of the knob 77, and a push-in operation lower than the surface. These operations switch between the normal stroke range L and the overstroke range M. This switching clearly distinguishes the operations, and eliminates risk of erroneous operations.

### Eleventh Embodiment

With reference to Figs. 36A to 39, the operation lever 80 allows a button 82 provided on a knob 81 to be pushed laterally. The operation lever 80 includes an upper portion 83 having a knob 81. The upper portion has a structure capable of moving downward with respect to the body. The upper portion 83 of the operation lever 80 includes an elongate hole 84. The body of the operation lever 80 includes a pin 85 that is inserted into the elongate hole 84.

With reference to Fig. 37, the button 82 of the operation lever 80 has an oblique surface 86 to abut against the upper end of a center shaft 87 that is biased upward. The abutment permits the button 82 to project from the knob 81 and the upper portion 83 to be biased upward. The position pin 4 is mounted on the lower end of the center shaft 87. With reference to Figs. 36A and 36B, push-in of the button 82 moves downward the center shaft 87 with the position pin 4, thus allowing the position pin 4 to move within the normal stroke range L.

With reference to Fig. 39, if the motor 71 or the control amplifier 22 is broken, the upper portion 83 is pushed down with the button 82 pushed. This push-down motion further lowers the position pin 4 in position, thus allowing the position pin 4 to move within the overstroke range M. This operation allows the position pin 4 to enter the overstroke portion 79, thus allowing for excessive rotation of the operation lever 80 by an amount corresponding to the rotation angle difference generator.

This embodiment includes the operation for normal pushing of the button 82 on the surface of the knob 81, and the operation for pushing the entire upper portion 83 including the knob 81 downward with the button 82 pushed. These operations switch between the normal stroke range L and the overstroke range M. This switching clearly distinguishes the operations, thus eliminating risk of erroneous operations.

In the above embodiments, the rotation angle difference generator B1 is formed by a difference in shape between the projection portion 8 and the recess portion 11 and a difference in shape between the bolt pin 31a and the hole 36. Other embodiments may employ a structure in which a deviation of a predetermined rotation angle is produced between the rotation shaft 3, 37 or 60 of the operation lever 1, 34, 59, 74 or 80 and the output lever 9 or 28.

### Twelfth Embodiment

With reference to Figs. 40 to 48, a control device 101 includes a casing 102 having two-piece separation structure like the first embodiment (see Fig. 2). The casing 102 includes therein, an operation lever 104 that is rotatable about a rotation shaft 103. The operation lever 104 is vertically operated, with the knob 104a at the distal end thereof grasped by a driver. The operation lever 104 includes a position pin 105. The casing 102 includes a position gate 106.

An output lever 107 includes a bearing 108. The rotation shaft 103 of the operation lever 104 is inserted into the bearing 108. The rotation shaft 103 includes a rotation angle sensor or a rotation angle detector 109 that singularly detects a rotation angle difference between the rotation shaft 103 and the bearing 108. The rotation angle sensor 109 is connected to a control amplifier or a control device 111 using a harness 110.

The bearing 108 of the output lever 107 includes a driving force receiving lever 112 extending from the bearing 108 toward one direction. The bearing 108 includes a transmitting lever 113 extending from the bearing 108 to another direction. The distal end of the transmitting lever 113 is connected to a range switching mechanism (not illustrated) using a rod 114. The transmitting lever 113 is provided at its intermediate portion with a projecting pin 115. The driving force receiving lever 112 has a worm wheel 116 provided at the distal end thereof. The worm wheel 116 engages with a worm gear 118 of a motor or a driving force generator 117. The motor 117 is mounted on a vehicle and faces down as shown in Fig. 40. The motor 117 may face up.

The operation lever 104 includes an extended portion 119 extending in a longitudinal direction of the transmitting lever 113 (see Fig. 45). The extended portion 119 includes a hole 120. The hole 120 has the projecting pin 115 of the transmitting lever 113 inserted therein. As illustrated in Fig. 46, the hole 120 is larger than the projecting pin 115, and a rotation angle difference generator B6 is provided between the hole 120 and the projecting pin 115. The hole 120 as a cam channel and the projecting pin 115 as a cam follower serves as an angular cam mechanism B6.

The output lever 107 has a resilient structure 121 provided at the distal end thereof. As illustrated in Fig. 48, the resilient structure 121 includes a slider holder 122, a spring 123, a slider 124, a shaft 125, and a roller 126. The spring 123 biases against the roller 126 as a "distal end".

With reference to Fig. 47, the casing 102 includes, at the peripheral position opposed to the resilient structure 121, a check plate 127 that is a portion of a constituent component located below the casing 102. The check plate 127 has, at the curved inner surface, a concavoconvex 128 corresponding to respective ranges. The concavoconvex 128 engages the roller 126 of the resilient structure 121 that is biased by the spring 123.

The operation lever 104 includes a resilient structure 129 extending from the operation lever 104 upward (see Fig. 43). The resilient structure 129 is identical to the resilient structure 121 mounted on the output lever 107. The casing 102 has a check plate 131 formed with a coneavoconvex 130 corresponding to the respective ranges that is positioned above the casing 102 corresponding to the resilient structure 129.

According to the embodiment, the motor 117 mounted on the vehicle faces down. This position allows the motor 117 and the air conditioner 95 to have a less tendency to interfere with each other. Unlike the previous embodiment, the embodiment does not need to move the air conditioner 95 rearward. The orientation of the motor 117 facilitates the layout of the air conditioner 95, and shortens a distance d between the instrument stay 94 and the air conditioner 95, thus shortening the length of a duct 97.

The output lever 107 has a check mechanism including the resilient structure 121 and the check plate 127. The check mechanism holds a rotation position of the output lever 107 at positions corresponding to the respective ranges.

The operation lever 104 has the check mechanism including the resilient structure 129 and a check plate 131. The check mechanism achieves a click feeling during rotation operations of the operation lever 104, and holds the operation lever 104 at a neutral position of the rotation angle difference generator B6, thus facilitating the angle difference detection.

The rotation angle difference generator B6 is provided between the transmitting lever 113 of the output lever 107 and the extended portion 119 on the side of the operation lever 104. The engagement point (engagement point between a distal end of the projecting pin and the hole 120) between the transmitting lever 113 and the extended portion 119 is located sufficiently away from the rotation shaft 103. This position is more advantageous when the operation force is manually transmitted from the operation lever 104 to the output lever 107.

### Thirteenth Embodiment

With reference to Figs. 49, 50, and 51, the automatic gear selector 201 or an automatic selector of a vehicular automatic transmission will be described. The gear selector 201 includes a rotatable operation lever 231; and an output lever 237 rotatable by the operation lever 231. The operation lever 231 is housed in a casing 202. The casing 202 includes a position gate 206. The operation lever 231 includes a knob 231a with a button 213b; and a rod 231c supporting the knob 213a. The operation lever 231 includes a case 211 supporting the rod 231c. The case 211 includes a slot 213 extending in a longitudinal direction of the operation lever 231. The case 211 includes, at the central portion, a bearing 215 in which a rotation shaft 239a is inserted (See Fig.55A). The bearing 215 allows for rotation of the rotation shaft 239a therein. The case 211 is provided at the end with a bearing 217(See Fig.54). The case 211 has, at the periphery, a concavoconvex 119 that engages with a leaf spring 265. The case 211 is provided at the end with a cam guide 232 as a rotation motion receiver. The cam guide 232 includes an arc cam channel or cam channel 218 that is cocentric with the rotation shaft 239a.

As illustrated in Fig. 55B, the cam guide 232 includes arc inner peripheral walls 232a and 232b which are cocentric with the rotation shaft 239a. The inner peripheral walls 232a and 232b are cocentric with the rotation shaft 239a. The cam guide 232 includes inner side walls 232c and 232d as stoppers extending in a radial direction R2. The inner peripheral walls 232a and 232b and the inner side walls 232c and 232d define the cam channel 218.

The operation lever 231 includes a position pin 204 through the rod 231c and the case 211 in the transverse direction. The position pin 204 is movable within the slot 213 and the position gate 206 in the longitudinal direction by the button 213b to be operated. The position pin 204 is rotatable within the position gate 206 in the direction R1 by the knob 213a to be operated.

The operation lever 231 includes a rotation angle sensor 243 as a rotation angle detector mounted on a bearing 217 of the case 211 (See Fig.54). The rotation angle sensor 243 includes a cylindrical first gear 235 mounted on the rotation shaft of the rotation angle sensor 243; and a cylindrical roller 240 extending from the distal end of the first gear 235 in the axial direction. The rotation angle sensor 243 detects the rotation number of the first gear 235, and detects a rotation angle difference between the operation lever 231 and the output lever 237.

The gear selector 201 includes the output lever 237 connected to the operation lever 231 using the rotation shafts 239a and 239b concentric with each other (See Fig.52). The output lever 237 includes a check plate 237a having a concavoconvex 237b on one side relative to the bearing 237d of the output lever 237. The concavoconvex 237b engages with a leaf spring 267. The output lever 237 includes a transmitting lever 237c with a pin on the other side relative to the bearing 237d. The transmitting lever 237c is connected to the rod 214 using the pin, thus allowing for connection of the output lever 237 to a range switching mechanism (see Fig.49).

With reference to Figs. 52 and 55A, the output lever 237 includes the rotation shaft 239b fixed to the bearing 237d. The output lever 237 rotates synchronously with the rotation shaft 239b. The output lever 237 includes a worm gear 233 as an actuator speed reduction mechanism fixed on the rotation shafts 239a and 239b. The worm gear 233 includes a worm wheel 233a as a gear fixed to the rotation shafts 239a and 239b. The worm gear 233 includes a worm 233b meshed with the worm wheel 233a. The output lever 237 includes a motor 241 to drive the worm gear 233. The motor 241 rotates the worm 233b and the worm 233b rotates the worm wheel 233b. The worm wheel 233b rotates synchronously with the rotation shafts 239a and 239b and the output lever 237.

The worm wheel 233a includes an arc cam projection 234 extending from the worm wheel 233a in the axial direction. The cam projection 234 is integral with the worm wheel 233a and concentric with the rotation shaft 239a. The cam projection 234 is inserted into the cam channel 218 of the cam guide 232. The cam projection 234 is movable in the cam channel 218 of the cam guide 232 in the rotational direction.

With reference to Fig.56B, the cam projection 234 is smaller in rotational dimension than the cam channel 218. The cam projection 234 and the cam guide 232 have an angular space or a rotation angle difference generator B7 in the cam channel 218 in the rotation direction. This space B7 allows the angular displacement of the cam projection 234 within the cam channel 218, i.e., relative rotation between the operation lever 231 and the output lever 237.

The cam projection 234 includes outer peripheral walls 234a and 234b as guides that are concentric with the rotation shaft 239a. The cam projection 234 includes outer side walls 234c and 234d extending in the radial direction R2. The outer peripheral walls 234a and 234b slide on the inner peripheral walls 232a and 232b of the cam guide 232, thus allowing the cam projection 234 to be guided in the cam channel 218. The outer side walls 234c and 234d abut against the inner side walls 232c and 232d, thus stopping relative angular displacement between the cam projection 234 and the cam channel 218.

With reference to Fig. 57, the cam projection 234 includes a first guide channel 234e in an arc shape that is concentric with the rotation shaft 239a. The first guide channel 234e includes an arc inner wall 234e1 located radially outside thereof. The inner wall 234e1 has a second gear 236 formed thereon. The second gear 236 is positioned concentrically with the rotation shaft 239a.

The second gear 236 has a representative arc, and the angular length is equal to or greater than one corresponding to a rotation angle difference produced between the operation lever 231 and the output lever 237 in dependence upon control response level. The second gear 236 meshes with the first gear 235 of the rotation angle sensor 243.

The cam projection 234 has, in a bottom wall 234e2 of the first guide channel 234e, a second guide channel 238a in an arc shape as a guide curved surface. The second guide channel 238a is concentric with the rotation shaft 239a. The second guide channel 238a has the roller 240 inserted therein, and guides the roller 240 in the rotation direction. The second guide channel 238a and the roller 240 serve as a guide 238. The guide 238 restricts the movement of the cam projection 234 in the radial direction. This restriction amount in the radial direction, or the radial width of the second guide channel 238a, is determined by a set value of backlash between the gears 135 and 136.

The gear selector 201 includes a control device 242 connected to the motor 241 and the rotation angle sensor 243, using a cable 221.

Next, the operation of the gear selector 201 will be described.

With reference to Fig. 49, a driver grasps the knob 231a and pushes the button 213b into the knob 231a. The operation permits the position pin 204 to be disengaged from the dent of the position gate 206, thus allowing the operation lever 231 to be rotatable. If the driver pushes down the knob 231a, for example, the operation lever 231 rotates clockwise in the R1 direction around the rotation shaft 239a. The cam guide 232 of the operation lever 231 rotates to abut against the cam projection 234. During this operation, the rotation shafts 239a, 239b and the output lever 237 do not rotate and keep in the initial angular positions.

Specifically, with reference to Fig. 55B, the cam projection 234 and the cam guide 232 relatively angularly displace from each other by the angular space B7. The outer peripheral walls 234a and 234b of the cam projection 234 slide on the inner peripheral walls 232a and 232b of the cam guide 232, thus allowing for guide between the cam projection 234 and the cam guide 232 for the relative angular displacement. The side wall 232d of the cam guide 232 and the side wall 234d of the cam projection 234 abut against each other, thus stopping the angular displacement between the cam projection 234 and the cam guide 232. This action stops the rotation of the cam guide 232 with respect to the cam projection 234, i.e., the rotation of the operation lever 231 with respect to the output lever 237.

With reference to Fig. 57, the first gear 235 is rotated to angularly displace on the second gear 236. During this operation, the second guide channel 238a guides the roller 240 in the direction of angular displacement.

The rotation angle detection sensor 243 detects the rotation number of the first gear 235 to be transmitted to the control device 242. The control device 242 converts the rotation number into a rotation angle. This rotation angle determines the rotation angle difference between the operation lever 231 and the output lever 237 or the rotation angle of the operation lever 231 rotated relative to the output lever 237.

The control device 242 operates the motor 241, and eliminates the rotation angle difference. Specifically, when the motor 241 rotates the worm 233b, the worm 233b rotates clockwise the worm wheel 233a by the rotation angle difference. The worm wheel 233a rotates clockwise the rotation shaft 239b and the output lever 237 by the rotation angle difference. This operation angularly advances the output lever 237, thus eliminating the rotation angle difference between the operation lever 231 and the output lever 237. During this operation, the operation lever 213 angularly follows the output lever 237, with a pushing force applied clockwise to the operation lever 231, thus holding the relative angular position between the operation lever 231 and output lever 237. Specifically, the cam guide 232 and the cam projection 234 are pressed against each other to keep contacting with each other.

Thereafter, the knob 231a is pushed to rotate clockwise the operation lever 231 and the output lever 237 in synchronization with each other.

According to this embodiment, when the control device 242 which controls the motor 241 is broken down or when a battery of the vehicle runs out, the operation lever 231 is rotated relative to the output lever 237 to abut the cam guide 232 of the operation lever 231 and the cam projection 234 on the worm wheel 233a of the worm gear 233 against each other. Next, the output lever 237 is rotated in the direction of the operation lever 231 rotated, thus allowing the ranges to be switched according to the intension of an operator.

The first gear 235 is provided between the rotation angle sensor 243 on the operation lever 231 and the cam projection 234 on the side of the output lever 237. The first gear 235 increases in the rotation speed according to a gear ratio with respect to the second gear 236. The first gear 235 allows for detection of the rotation angle difference at a certain acceleration rate, and extends a measuring range of the rotation angle sensor 243. This measurement range remarkably enhances the resolving power in the control device 242, thus enhancing the operability as a result.

The cam projection 234 on the side of the output lever 237 includes the second gear 236 inside thereof. Alternatively, the cam projection 234 may include a gear outside thereof.

The guide 238 including the second guide channel 238a and the roller 240 appropriately holds the backlashes between the gears 135 and 136 of the rotation angle detection sensor 243, and the guide 238 does not require the adjusting mechanism of backlash as described in Japanese Patent Application Laid-Open No. H5-26330.

The rotation angle sensor 243 includes the roller 240 at the distal end of the gear 136. The roller 240 reduces the sliding resistance.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

A vehicular transmission includes a rotatable shift lever. The transmission includes an output member rotatable by the shift lever for actuating a transmission. The transmission includes an angular cam mechanism between the shift lever and the output member for rotating the shift lever relative to the output.

The output member includes an actuator for rotating the output member to angularly follow the operation lever.

The angular cam mechanism includes a cam channel; and a cam follower engaging in the cam channel.

One of the shift lever and the output includes a rotation shaft as the cam follower. The other one of the shift lever and the output includes a bearing having a hole having the rotation shaft inserted therein. The hole serves as the cam channel.

One of the shift lever and the actuator has the cam channel. The other one of the shift lever and the actuator has the cam follower.

## Claims

1. A vehicular automatic transmission comprising:
an operation lever rotatable about a rotation shaft thereof;
an output lever rotatable about the rotation shaft of the operation lever to transmit a driving force for switching between ranges;
a driving force generator configured to rotate the output lever; and
a detector configured to detect rotation angle difference between the rotation shaft and the output lever;
a controller configured to control the driving force generator to rotate the output lever in a direction of eliminating the rotation angle difference detected.

2. The vehicular automatic transmission according to claim 1,
wherein the operation lever and the output lever have therebetween a rotation angle difference generator configured to produce a predetermined rotation angle difference between the operation lever and the output lever,
wherein the operation lever and the output lever are engaged to rotate in said direction.

3. The vehicular automatic transmission according to claim 2,
wherein the output lever comprises a recess portion for a projection portion of the rotation shaft to be inserted thereinto,
wherein the recess portion and the projection portion have the rotation angle difference generator provided therebetween.

4. The vehicular automatic transmission according to claim 2,
wherein the output lever has a bearing for the rotation shaft of the operation lever to be inserted thereinto,
wherein the bearing has a projection directed outside,
wherein the projection and a proximal end of the operation lever have the rotation angle difference generator provided therebetween.

5. The vehicular automatic transmission according to claim 2,
wherein the output lever comprises a bearing corresponding to the rotation shaft of the operation lever,
wherein the output lever comprises:
a first lever portion extending on one side relative to the bearing to receive a driving force; and
a second lever portion extending on the other side relative to the bearing,
wherein the second lever portion and an extended portion provided to the operation lever have the rotation angle difference generator provided therebetween.

6. The vehicular automatic transmission according to claim 5,
wherein the second lever portion of the output lever has an end having an exchangeable third lever portion.

7. The vehicular automatic transmission according to claim 2,
wherein the rotation angle difference generator has a resilient member or a resilient structure fitted thereinto.

8. The vehicular automatic transmission according to claim 7,
wherein the resilient member or the resilient structure is pressure sensitive to judge actuation of the operation lever.

9. The vehicular automatic transmission according to claim 1,
wherein the bearing of the output lever is formed in a tubular shape,
wherein the rotation shaft of the operation lever is inserted into and supported by the bearing, thus forming a dual structure.

10. The vehicular automatic transmission according to claim 9,
wherein the detector has a structure where two brush bases engage with the rotation shaft and the bearing for rotating, respectively and has a base board interposed therebetween,
wherein detection of rotation angles of respective brush bases relative to the base board allows for detection of a rotation angle difference between the rotation shaft and the bearing.

11. The vehicular automatic transmission according to claim 1,
wherein the rotation shaft of the operation lever is formed with a check plate having a concavoconvex corresponding to the ranges,
wherein the concavoconvex of the check plate is engageable with an end of a resilient member or a resilient structure supported in proximity to the check plate.

12. The vehicular automatic transmission according to claim 1,
wherein the operation lever supports, in proximity to the rotation shaft thereof, a check plate having a concavoconvex corresponding to the ranges,
wherein the concavoconvex of the check plate is engageable with a resilient member or an end of a resilient structure provided to the operation lever.

13. The vehicular automatic transmission according to claim 1,
wherein the operation lever includes a position pin to move toward a proximal end of the operation lever by operating a button of a knob,
wherein the operation lever has a periphery having a casing including a position gate to engage with the position pin corresponding to the ranges,
wherein the position gate has a bottom side having both ends in a stroke direction,
wherein both the ends have overstroke portions for the position pin to be inserted thereinto.

14. The vehicular automatic transmission according to claim 13,
wherein the position gate to engage with the position pin is separated into a normal stroke range and an overstroke range,
wherein the knob of the operation lever includes a vertical push button,
wherein when the vertical push button are pushed into lower than a surface of the knob, the position pin moves within the overstroke range to be inserted into the overstroke portions on the both the ends in the stroke direction.

15. The vehicular automatic transmission according to claim 13,
wherein the position gate to engage with the position pin is separated into a normal stroke range and an overstroke range,
wherein the operation lever has an upper portion structured to be pushed downward,
wherein the knob provided to the upper portion includes a transverse push button,
wherein when the transverse push button is pushed and the upper portion of the operation lever is pushed into, the position pin moves within the overstroke range to be inserted into the overstroke portions on both the ends in the stroke direction.

16. A vehicular automatic transmission according to claim 1, wherein the driving force generator faces up or down, with the driving force generator mounted on a vehicle.

17. A vehicular automatic transmission according to claim 1,
wherein the operation lever supports, in proximity to the rotation shaft thereof, a check plate having a concavoconvex corresponding to the ranges,
wherein the concavoconvex is engageable with an end of a resilient member or a resilient structure provided to the output lever.

18. An automatic selector of a vehicular automatic transmission, comprising:
a rotatable operation lever having a cam guide; and
an output lever rotatable relative to the operation lever and comprising an actuator including a transmission mechanism including a gear member having thereon a cam projection engaging the cam guide; and
a rotation angle difference generator between the cam guide and the cam projection and defining a range of relative rotation between the operation lever and the output lever.

19. An automatic selector according to claim 18,
wherein the operation lever has a rotation angle detector including a first gear,
wherein the gear member includes a second gear engaging the first gear,
wherein the first gear and the second gear are used to detect rotation angle difference between the operation lever and the output.

20. An automatic selector according to claim 19,
wherein the cam guide and the cam projection has therebetween a guide cocentric with the operation lever.

21. An automatic selector according to claim 20,
wherein the guide comprises:
a guide channel cocentric with the operation lever; and
a roller inserted in the guide channel.
